# EUROPÄISCHE PATENTSCHRIFT

(11) **EP 2 313 443 B1**
(45) Veröffentlichungstag und Bekanntmachung des Hinweises auf die Patenterteilung: **13.03.2019**
(21) Anmeldenummer: 09780094.0
(22) Anmeldetag: 02.07.2009
(51) Int. Cl.: C08F 255/00, C08F 255/02, C08F 255/04, C09J 151/06, C08L 51/06, C09D 151/06

(54) **SILANMODIFIZIERTE POLYOLEFINE MIT HOHEM FUNKTIONALISIERUNGSGRAD**
SILANE-MODIFIED POLYOLEFINS HAVING A HIGH DEGREE OF FUNCTIONALIZATION
POLYOLÉFINES MODIFIÉES PAR UN SILANE, AYANT UN DEGRÉ ÉLEVÉ DE FONCTIONNALISATION

(30) Priorität: 15.08.2008 DE 102008041279
(43) Veröffentlichungstag der Anmeldung: 27.04.2011
(73) Patentinhaber: Evonik Degussa GmbH, 45128 Essen (DE)
(72) Erfinder: BECKER, Hinnerk, Gordon, 45257 Essen (DE); WEY, Hans, Günther, 45470 Mülheim (DE)
(74) Vertreter: Evonik Patent Association
(86) Internationale Anmeldenummer: PCT/EP2009/058327
(87) Internationale Veröffentlichungsnummer: WO 2010/018027

(56) Entgegenhaltungen:
- EP-A- 1 508 579
- EP-A- 1 900 773
- WO-A-89/11513
- WO-A-2007/008765
- US-A- 5 994 474
- US-A1- 2009 143 531
- US-B1- 6 235 848
- US-B1- 6 281 288

## Beschreibung

Die vorliegende Erfindung betrifft modifizierte Polyolefine mit hohem Funktionalisierungsgrad auf Basis von teilkristallinen Polyolefinpolymeren, die einen bestimmten Anteil Poly(propylen) und einen bestimmten Anteil an Poly(ethylen)-Kettenelementen enthalten, wobei auf das Polymer ein oder mehrere Silane aufgepfropft sind, ein Verfahren zur Herstellung der Polyolefine sowie deren Verwendung, insbesondere in oder als Klebstoff.

Amorphe Poly-alpha-Olefine dienen vielfach als Klebrohstoffe für eine breite Palette von Anwendungen. Der Einsatzbereich erstreckt sich vom Hygienesektor über Laminierungen und Verpackungskleber bis zum konstruktiven Kleben und Verwendungen in der Holzverarbeitung. Unmodifizierte amorphe Poly-alpha-Olefine (sog. APAOs) zeichnen sich dabei durch eine rein physikalische Härtung aus, die auf Grund ihres thermoplastischen Charakters beliebig reversibel ist. Sie weisen allerdings nur begrenzte Zug- und Klebscherfestigkeiten sowie eine relativ niedrige Wärmestandfestigkeit auf. Außerdem lässt sich mit ihnen keine kovalente Einbindung reaktiver Oberflächengruppen (wie z. B. -OH) in eine Verklebung erreichen.

Die beschriebenen Nachteile unmodifizierter APAOs lassen sich durch eine nachträgliche Funktionalisierung (Modifizierung) beheben, wobei vor allem Carbonsäuren bzw. Carbonsäurederivate und/oder Silane zur Modifizierung eingesetzt werden.

Die Herstellung silanmodifizierter Polyolefine durch Umsetzung von Polyethylen mit ungesättigten Silanen ist seit langem bekannt. Schon in EP 0 004 034 wird eine Methode zur Vernetzung von Poly(a-Olefinen) mit Hilfe von Silanverbindungen beschrieben, wobei möglichst hohe Vernetzungsgrade erzielt werden sollen. Die Vernetzung erfolgt unmittelbar nach dem Pfropfen und führt zu steifen, hochfesten Materialien mit niedriger Versprödungstemperatur, wie sie z. B für die Herstellung von Kabelummantelungen und/oder Formkörpern verwendet werden. Als Klebstoffe lassen sich die beschriebenen Polymere nicht einsetzten. In der US 4,412,042 wird ein Verfahren zur Herstellung von durch Silanverknüpfungen vernetzten Polyolefinen beschrieben, dessen vernetzte Produkte eine hohe mechanische Festigkeit, eine verbesserte Verformbarkeit und eine verminderte permanente prozentuale Dehnung aufweisen sollen. Als Polyolefine werden Ethylencopolymere niedriger Dichte eingesetzt, die mittels Gasphasenpolymerisation hergestellt wurden. Die erfindungsgemäßen Polymere werden als Überzugsmaterialien zur Herstellung von Drähten oder Kabeln sowie zur Herstellung von Formkörpern, Rohren, Platten oder Folien verwendet. Als Klebstoffe lassen sich die beschriebenen Polymere nicht einsetzten.
In der DE 1 963 571, der DE 2 353 783 und der DE 2 406 844 werden Verfahren zur Vernetzung von Polyethylenpolymeren bzw. Ethylen-Mischpolymerisaten, die geringe Mengen an Propen und/oder 1-Buten enthalten, beschrieben. Zielprodukte sind vernetzte Formkörper auf Polyethylenbasis.
In der DE 2 554 525 und der DE 2 642 927 werden Verfahren zur Herstellung von stranggepressten Produkten inkl. der Silanfunktionalisierung eines Polymers, der Einarbeitung eines Silanol-Kondensationskatalysators sowie der Formgebung und Vernetzung des Polymers, in einem Arbeitsschritt, durch Verwendung eines Extruders beschrieben. Als Endanwendungen werden Kabel, Rohre und Schläuche genannt. Mit den auf diese Weise hergestellten Polymeren sind keine Verklebungen möglich, auch ist die gesamte Weiterverarbeitung auf Grund der unmittelbar nach der Modifizierung durchgeführten Vernetzung nur sehr eingeschränkt möglich.

Ebenfalls seit langem bekannt, ist die Möglichkeit durch das Einführen von Silangruppen in Polyolefine die Haftung auf funktionellen Oberflächen wie z. B. Glas zu verbessern. So werden bereits in der US 3,075,948 Pfropfpolymere bestehend aus ungesättigten Silanmonomeren und festen Poly(alpha-Olefinen) mit 2 - 6 Kohlenstoffatomen beschrieben, die einen verbesserten Wärmestand und eine gute Haftung auf Glas aufweisen sollen. Bei der beschriebenen Modifikation handelt es sich entweder um eine reine Oberflächenmodifizierung fester Polymerpartikel, Polymerscheiben oder Polymerformteile, besonders bevorzugt um eine Lösungsmodifikation, in der das Polymer zumindest teilweise angelöst wird, oder um eine Schmelzmodifikation, die allerdings nicht bevorzugt ist. Die erhaltenen modifizierten Polymere werden für die Herstellung von Formteilen und Behältern sowie als Beschichtung von Glasbehältern eingesetzt, für den Einsatz als Schmelzklebstoffe eignen sie sich auf Grund des vollständig unterschiedlichen Anforderungsprofils (Schmelzviskosität, Materialsteifigkeit im unvernetzten Zustand usw.) nicht.

Auch der Einsatz von amorphen Poly(alpha-Olefinen) für die Silanvernetzung ist bereits bekannt. So werden beispielsweise in der EP 0 260 103 amorphe silanmodifizierte Polymere mit gesättigtem Kohlenstoff-Gerüst und niedrigem Molekulargewicht beschrieben, die als Beschichtungsmittel zum Schutz vor Witterungseinflüssen eingesetzt werden. Als Beispiele für solche Polymere werden Copolymere von Ethylen und/oder α-Olefinen genannt, insbesondere EPM und EPDM. Die beschriebenen Basispolymere sind amorph und gummiartig und weisen eine hohe Elastizität auf. Auf Grund ihres gummiartigen Charakters ist die Verarbeitbarkeit im unvernetzten Zustand schlecht. Für die in der vorliegenden Anmeldung beabsichtigten Anwendungen im Kleb- und Dichtstoffbereich sind die Produkte nicht geeignet.

In der DE 4 000 695 wird die Verwendung weitgehend amorpher Poly(alpha-Olefine) in einem Verfahren beschrieben, in welchem die APAOs mit einem Radikalspender und optional zusätzlich pfropffähigen Monomeren (z. B. Vinylsilanen) bei gleichzeitiger Scherbelastung umgesetzt werden. Die erhaltenen Produkte eignen sich für den Einsatz als Teppichbeschichtungsmassen oder als Schmelzklebstoffe. Die Polymere weisen zwar einen Erweichungspunkt im unteren bis mittleren Temperaturbereich von 70 - 140 °C auf, verfügen aber nur über eine niedrige Funktionalisierung, da das Verhältnis von Pfropfpolymerisation zu Kettenspaltung ungünstig ist. Auf Grund der niedrigen Funktionalisierung verläuft die Vernetzungsreaktion langsam, die Anbindung an reaktive Oberflächen ist nur relativ schwach ausgeprägt. Hinzu kommt, dass die Zugfestigkeit sowohl des unvernetzten als auch des vernetzten modifizierten Polyolefins nur relative geringe Werte erreicht, wodurch die Produkte von vielen Anwendungsbereichen ausgeschlossen bleiben.

In der JP 2003-002930 A werden Pfropfpolymere aus amorphen Poly(a-Olefin)en, ungesättigten Carbonsäuren und optional zusätzlich ungesättigten aromatischen Substanzen (z. B. Styrol) hergestellt. Die verwendeten Polyolefine sind amorph und weisen in DSC-Messungen keine Kristallinität > 1 J/g auf. Feuchtigkeitsvernetztende Monomer-Systeme wie z. B. Vinyl-Silane werden nicht diskutiert, die gepfropften Polyolefine weisen auf Grund der Eigenschaften ihres Basispolymers und der verwendeten Pfropfmonomere nicht die gewünschten Materialparameter auf, insbesondere sind sie zu weich und zeigen eine zu geringe Zugfestigkeit.
In der WO 03/070786 werden ein Verfahren zur Herstellung modifizierter Poly(1-buten)-Polymere, die daraus erhältlichen modifizierten Poly(1-buten)-Polymere sowie eine die modifizierten Poly(1-buten)-Polymere enthaltende Klebstoffzusammensetzung beschrieben. Dabei weist das für die Modifikation verwendete Poly(1-buten)-Basispolymer einen Schmelzpunkt im Bereich von 0 bis 100 °C, einen Isotaktizitätsindex von < 20 % sowie eine Polydispersität von < 4.0 auf. Als Pfropfmonomere werden ungesättigte Carbonsäuren, Carbonsäureanhydride bzw. entsprechende Derivate wie Amide, Ester usw. genannt. Vinylsilane werden nicht beschrieben. Die hergestellten modifizierten Polymere sind auf Grund ihrer geringen Kristallinität relativ weich und eher wachsartiger Natur, die geringe Polydispersität führt zu Schwierigkeiten bei der Verarbeitung. Der niedrige Schmelzpunkt bewirkt eine schlechte Wärmestandfestigkeit der Klebverbindungen. Die Polymere sind nicht für die in der vorliegenden Anmeldung beabsichtigten Anwendungen geeignet.

In der WO 2006/069205 werden modifizierte Polyolefine auf Basis von niederviskosen Polypropylenpolymeren mit einem Propylenanteil von > 50 ma-% und hohem Anteil an isotaktischen Propylensequenzen beschrieben, die u. a. auch über eine radikalischen Pfropfpolymerisation hergestellt werden können. Aufgrund der Materialeigenschaften der verwendeten Basispolymere sind die erhalten Produkte nicht für die in der vorliegenden Anmeldung beabsichtigten Einsatzgebiete geeignet.
In der WO 2007/067243 werden durch Carbonsäuren funktionalisierte Polypropylenpolymere mit hohem bis sehr hohem Propylenanteil beschrieben. Feuchtigkeitsvernetzende Systeme, z. B. auf Basis von Silanen, werden nicht beschrieben. Auf Grund der verwendeten Basispolymere und der verwendeten Pfropfmonomere sind die beschriebenen Produkte nicht für die in der vorliegenden Anmeldung beabsichtigten Einsatzgebiete geeignet.

In der WO 91/06580 werden silanmodifizierte ungesättigte amorphe Polymere beschrieben, die im vernetzten Zustand z. B. als Formkörper eingesetzt werden können. Als weitere Anwendungsbeispiele für die silanmodifizierten Polymere werden Klebstoffzusammensetzungen, auch von Schmelzklebstoffen genannt. Als Beispiele für ungesättigte Basis-Polymere werden gummiartige Polymere, wie z. B. Styrol-Butadien-Blockcopolymere (SBS), Styrol-Isopren-Blockcopolymere (SIS), Styrol-Butadien-Rubber (SBR), Nitril-Rubber, Polychloropren-Rubber und Butyl-Rubber genannt. Alle genannten Basispolymere weisen eine Gummielastizität (d. h. auch schlechte Verarbeitbarkeit) bzw. andere negative Materialeigenschaften (wie z. B. schlechte Wärmestandfestigkeiten) auf, die sie für Schmelzkleberanwendungen ungeeignet machen.

Der Einsatz silanmodifizierter Polymere in Heißschmelzklebstoffen ist ebenfalls bekannt. So wird beispielsweise in der WO 89/11513 eine Klebstoffzusammensetzung beschrieben, die mindestens ein silanmodifiziertes bzw. silangepfropftes teilkristallines Polymer enthält. Als Basispolymere werden dabei insbesondere Homo-, Co- und Terpolymere von C₂-₆ α-Olefinen sowie isotaktische Polypropylenpolymere und Blends von Polypropylenen, insbesondere wenn sie auch ataktisches Polypropylen enthalten, genannt. Beim Pfropfen von isotaktischem Polypropylen (iPP) kommt es auf Grund der molekularen Struktur des iPP zu einem extrem schnellen und vollständigen Polymerabbau, wobei nur sehr geringe Funktionalisierungsraten erzielt werden können, die Pfropfprodukte weisen zudem einen stark wachsartigen Charakter auf. Ataktisches Polypropylen hingegen weist von sich aus einen sehr niedrigen Erweichungspunkt auf [siehe z. B.: H.-G. Elias; Makromoleküle; Bd. III; Wiley-VCH: Weinheim; 2001]. Die in WO 89/11513 beschriebene Verfahrensweise führt zu einer Addition dieser Nachteile und zu einer sehr schlechten Produktperformance im Hinblick auf die Materialeigenschaften. Die Einstellung von Viskosität, Schmelzverhalten und "Tack" der Klebzusammensetzung wird ursächlich auf die Verwendung längerkettiger (≥ 3 Verbindungsatome zwischen Si-Atom und der Polymerkette) Silanmonomere zurückgeführt, die zu einer "offeneren Struktur" führen sollen. Die Verwendung von längerkettigen Silanmonomeren ist insofern nachteilig, als sie zu einer schwächeren Vernetzung durch einen höheren Polymerisationsgrad der Netzketten (d. h. der monomeren Grundeinheiten zwischen zwei Vernetzungsstellen) führt, was zusätzlich nachteilig auf die Materialeigenschaften des Pfropfpolymers auswirkt.

In der DE 195 16 457 wird eine vernetzbare Klebstoffzusammensetzung bestehend aus mindestens 50 ma-% eines silangepfropften Polyolefins und zusätzlich eines carbonsäuregepfopften Polyolefins beschrieben. Als Basispolymere für die Pfropfung werden Poyl(ethylen-co-vinylacetat), Polypropylen, Polyethylen, Poly(ethylen-co-methacrylat) und Poly(ethylen-co-methacrylsäure) genannt. Auf Grund der verwendeten Basispolymere und der verwendeten Pfropfmonomere sind die beschriebenen Produkte nicht für die gewünschten Einsatzgebiete geeignet.

In der EP 1 508 579 werden (Silan-)modifizierte kristalline Polyolefinwachse beschrieben. Die verwendeten Wachse werden mittels Metallocenkatalyse hergestellt und weisen einen hohen Propylenanteil auf. Aufgrund ihrer wachsartigen Eigenschaften und den daraus resultierenden schlechten Klebeigenschaften sind die beschriebenen Polymere für die beabsichtigten Einsatzgebiete nicht geeignet. Eine hohe Funktionalisierung gemäß den vorliegenden Anforderungsbedingungen ist auf Grund der Materialeigenschaften der eingesetzten Basispolymere nicht zu erreichen.

In der WO 2007/001694 werden Klebstoffzusammensetzungen beschrieben, die funktionalisierte Polymere (z. B. Silangepfropfte- oder Maleinsäureanhydrid-gepfropfte Propylenpolymere) enthalten. Die Basispolymere werden mit Metallocenkatalysatoren hergestellt, und weisen nicht die für das Erzielen von hohen Funktionalisierungsraten erforderlichen Materialeigenschaften auf.

In der WO 2007/002177 werden Klebstoffzusammensetzungen auf Basis von Poly(propylen)-random-Copolymeren und funktionalisierten Polyolefincopolymeren und nicht funktionalisierten Klebharzen beschrieben, wobei die Poly(propylen)-random-Copolymere eine Schmelzenthalpie von 0,5 bis 70 J/g und einen Anteil isotaktischer Propylentriaden von mindestens 75 % (besonders bevorzugt > 90 %) aufweisen, und die verwendeten funktionalisierten (syndiotaktischen) Polymere einen Gehalt an funktionellen Monomereinheiten von mindestens 0,1 % aufweisen und im Fall syndiotaktischer Polymere mit einem Anteil von < 5 ma-% in der Klebstoffzusammensetzung vorhanden sind. Die beschriebenen Poly(propylen)-random-Copolymeren werden bevorzugt durch Metallocenkatalyse hergestellt, wobei die Polydispersität einerseits mit 1,5 bis 40 angegeben wird, andererseits mit 1,8 bis 5. Der erstgenannte Bereich weist eine für Metallocen-katalysierte Polymere unüblich weite Spannbreite auf, die auf eine multimodale Molmassenverteilung und die gleichzeitige Anwesenheit mehrere Katalysatorspezies hindeuten. In die gleiche Richtung deutet der angegebne Schmelzbereich von 25 bis 105 °C der mehrere Schmelzpeaks unterschiedlicher Intensität aufweist, wobei die angegebene Grenze von 105 °C einen für Polypropylenpoylmere, insbesondere für isotaktische Poylpropylenpolymere, unüblich niedrigen Wert aufweist. Die funktionalisierten Polyolefincopolymeren umfassen funktionalisierte Poly(propylen)-random-Copolymere, syndiotaktische Polypropylencopolymere und sogenannte isotaktisch-ataktische Polypropylen-Pfropfpolymere. Als funktionelle Monomereinheiten werden insbesondere Maleinsäureanhydrid und Glycidylmethacrylate aber auch diverse andere funktionelle Gruppen wie z. B. Vinylsilane genannt. Aufgrund des teilweise sehr hohen Anteils an isotaktischen Polypropyleneinheiten (mit starkem radikalischen Polymerabbau) stellt sich ein schlechtes Verhältnis von Pfropfung/Funktionalisierung zu Kettenspaltung ein. Die genannte Obergrenze für den Schmelzbereich sorgt für eine niedrige Wärmestandfestigkeit der entsprechenden Verklebungen. Die beschriebenen syndiotaktischen Polypropylenpolymere sind zudem teuer und am Markt kaum verfügbar.

In der WO 2007/008765 wird der Einsatz von niedrigviskosen silangepfropften Poly(ethylen-co-1-olefin)-Polymeren als Klebrohstoff beschrieben. Die Polymere, die zur Modifizierung eingesetzt werden, weisen einen Ethylengehalt von mindestens 50 mol-% Ethylen auf sowie bevorzugt eine Polydispersität von 1 bis 3,5, wobei die gesamte Bandbreite mit 1 bis 5 angegeben wird. Sie zeigen eine niedrige Schmelzviskosität von minimal 2 000 und maximal 50 000 cP bei 177 °C. Als 1-Olefin-Comonomere werden zahlreiche höhere 1-Olefin wie z. B. 1-Hexen und 1-Octen aber auch einige verzweigte 1-Olefine wie z. B. 3-Methyl-1-penten sowie diverse weitere Monomere, wie z. B. Diene, Styrol usw. genannt, die die vorherige Anforderung "1-Olefin" nicht erfüllen, und somit zu Polymeren mit vollständig unterschiedlichen Materialeigenschaften führen. Insbesondere Dienpolymere neigen beim Einsatz in peroxidischen Prozessen zur Vernetzung und Ausbildung von Gelteilchen. Dies wird verstärkt durch die erfindungsgemäße Anwesenheit von Vinylendgruppen in den Basispolymeren. Die silangepfropften Polymere weisen sehr niedrige Versagenstemperaturen von lediglich > 43 °C (PAFT) bzw. > 60 °C (SAFT) auf. Die Verwendung von Polyolefinen mit hohem Ethylenanteil bedeutet zwangsläufig das Vorhandensein von langen Ethylenblöcken im Polymer. Dies wiederum führt zu schlechten Benetzungs- und Haftungseigenschaften auf vielen Kunststoffoberflächen, so dass sehr viele Verklebungsprobleme nicht optimal gelöst werden können. Zudem neigen lange Polyethylensequenzen zur peroxidischen Vernetzung (was u. a. bei der Herstellung von Kabelummantelungen technisch ausgenutzt wird), wodurch eine Gelbildung unvermeidlich ist. Die ungepfropften Basispolymere weisen eine relativ geringe Molmasse und Schmelzviskosität von maximal 50 000 cP bei 177 °C auf. Bekannter Weise wird die Molmasse (und damit auch die Schmelzviskosität) bei einer peroxidisch induzierten Pfropfreaktion durch Kettenspaltung abgebaut. Entsprechende Polymere mit hohen Funktionalisierungsraten weisen daher zwangsläufig sehr niedrige Molmassen/Schmelzviskositäten auf und sind für viele Applikationsbereiche nicht geeignet. Bekannter Maßen wird durch peroxidisch induzierte Pfropfreaktionen ebenfalls die Polydispersität der verwendeten Polymere weiter reduziert. Demzufolge weisen die modifizierten Polymere eine Polydispersität von deutlich kleiner 3,5 auf, was zu diversen Nachteilen vor allem bei den Verarbeitungseigenschaften führt. Die Verwendung relativ niedermolekularer Basispolymere führt generell zu eher geringen Funktionalisierungsraten. Ebenfalls beschrieben werden Harzzusammensetzungen, die bereits vernetzte Poly(ethylen-co-1-olefin)-Polymere enthalten. Derartige gummiartige Bestandteile enthaltende Zusammensetzungen sind für optisch anspruchsvolle Anwendungen nicht geeignet (schlechte Oberflächenstruktur) und können außerdem auf vielen im Klebstoffbereich üblichen Applikationsanlagen (z. B. Schmelzesprühen) nicht verarbeitet werden (Verstopfung der Applikationsdüsen). Die als Anwendung beschriebenen Schmelzkleber weisen hauptsächlich niedrige Schmelzviskositäten auf. Ebenfalls beschrieben wird der Einsatz von kristallinen und teilkristallinen Poly(propylen-co-1-olefin)polymeren, die sich ebenfalls für die Pfropfung eignen sollen. Diese weisen einen Propylengehalt von mindestens 50 mol-% sowie bevorzugt ebenfalls eine Schmelzviskosität von maximal 50 000 cP bei 177°C (vor der Pfropfung und nach der Pfropfung) sowie eine Polydispersität von 1 bis 3,5 auf. Die Kristallinität wird mit maximal 2 - 60 % (d. h. 3 - 100 J/g) angegeben und liegt damit im Wesentlichen im Bereich hoher Kristallinität. Dies wiederum bewirkt eine schlechte Benetzung von, bzw. eine schlechte Adhäsion auf Polyolefinoberflächen und schließt zahlreiche Applikationsfelder aus.
In der EP 0827994 wird die Verwendung von silangepfropften amorphen Poly(alpha-Olefinen) als feuchtigkeitsvernetztender Klebrohstrohstoff oder Klebstoff beschrieben. Als Basispolymere werden ataktisches Polypropylen (aPP), ataktisches Poly(1-buten) oder vorzugsweise Co- bzw. Terpolymere aus C₄-C₁₀ alpha-Olefinen (0 - 95 ma-%), Propen (5 - 100 ma-%) und Ethylen (0 - 20 ma-%) eingesetzt. Das in den Beispielen dargestellte silanmodifizierte APAO weist einen Erweichungspunkt von 98 °C, eine Nadelpenetration von 15*0,1mm und eine Schmelzviskosität von 6000 mPa*s auf. Die verwendeten ataktischen Polyolefine und APAOs weisen eine relativ geringe Molmasse und eine relativ niedrige Kristallinität auf, was bei der Modifizierung zu Produkten mit geringer Flexibilität führt, die eine geringe Funktionalität und eine geringe Zugfestigkeit besitzen, und daher für viele Anwendungen nicht geeignet sind.
Bezüglich der Löslichkeit von Polypropylenpolymeren in aromatischen Lösungsmitteln und/oder Ethern gibt es zahlreiche Publikationen in der wissenschaftlichen Literatur.
So wurde beispielsweise gefunden, dass der Anteil von xylollöslichen Bestandteilen bei isotaktischem Poly(propylen)-Homopolymer, welches durch Metallocenkatalyse gewonnen wurde, üblicher Weise bei deutlich < 1 ma-% liegt, bei random-Copolymeren mit Ethylen werden je nach Ethylenanteil xylollösliche Anteile von maximal 5 ma-% gefunden (W. Spaleck in: "Metallocene based Polyolefins"; J. Scheirs, W. Kaminsky (Hrsg.); J.Wiley & Sons; Weinheim; 1999).

Das DokumentEP 1 900 773 offenbart ein Ethylen/Propylen/Buten-Copolymer, das mit Silanen modifiziert wird.

Es bestand somit ein Bedarf an funktionalisierten Polyolefinen, mit verbesserten Materialeigenschaften, insbesondere an solchen Polyolefinen, die einen hohen Funktionalisierungsgrad auch in Kombination mit höherer Molekularität/Schmelzviskosität, und eine schnelle reaktive Anbindung an funktionelle Oberflächen insbesondere auf Glas und Holz, eine sehr gute Haftung auf unbehandeltem Polypropylen sowie eine schnelle Vernetzungsgeschwindigkeit und hohe Zugfestigkeiten im unvernetzten und vernetzten Zustand aufweisen. Überraschenderweise wurde gefunden, dass Polyolefine gemäß der vorliegenden Erfindung das komplexe Anforderungsprofil erfüllen, und somit insbesondere zum Einsatz in oder als Klebstoff geeignet sind.

Demgemäß ist ein erster Gegenstand der vorliegenden Erfindung ein modifiziertes Polyolefin, das ausgewählt aus Poly(ethylen-co-propylen-co-1-buten) ist, welches einen bestimmten Anteil an Propylen enthält, und dass eine Schmelzenthalpie in einem bestimmten Bereich und eine Mindestlöslichekit in Xylol und Tetrahydrofuran (THF) bei Raumtemperatur aufweist, wobei die mittels Differentialkalorimetrie (DSC) beim 2. Aufheizen bestimmte Schmelzenthalpie des zur Modifizierung eingesetzten Basispolymers mindestens 9 J/g und maximal 20 J/g beträgt, seine Löslichkeit in Xylol bei Raumtemperatur (d. h. der Anteil der Polymerprobe, der in einem standardisierten Lösungsversuch in Xylol löslich ist) mindestens 96 ma-%, und in Tetrahydrofuran bei Raumtemperatur (d. h. der Anteil der Polymerprobe, der in einem standardisierten Lösungsversuch in Tetrahydrofuran löslich ist) mindestens 67 ma-% beträgt, der durch ¹³C-NMR-Spektroskopie bestimmte Gehalt an Propylen zwischen 50 und 75 ma-% liegt und der durch ¹³C-NMR-Spektroskopie bestimmte Gehalt an Poly(ethylen)triaden (bezogen auf den Ethylengehalt des Polymers) maximal bei 2,5 ma-% liegt, wobei auf das Polyolefin ein oder mehrere Silane aufgepfropft sind.

Die erfindungsgemäßen, speziell ausgewählten Polyolefine eignen sich insbesondere und bevorzugt zur Herstellung von Verklebungen und zeigen dort gegenüber den bekannten Polymeren entscheidende Vorteile. So weisen die Polyolefine gemäß der vorliegenden Erfindung einen sehr hohen Funktionalisierungsgrad auch bei hohen Schmelzviskositäten, eine sehr gute Haftung auf unbehandelten Polyolefinoberflächen sowie eine schnelle reaktive Anbindung an funktionelle Oberflächen und eine schnelle Vernetzungsgeschwindigkeit auf. Durch einen hohen Pfropfgrad (entspricht einer hohen Vernetzungsdichte im vernetzten Zustand), wird nach der Vernetzung eine hohe Materialkohäsion erzielt, was sowohl zu sehr hohen Zugfestigkeiten als auch zu sehr hohen Klebscherfestigkeiten führt, wobei das unvernetzte modifizierte Polyolefin eine hohe Flexibilität und einen moderaten Erweichungspunkt aufweist, also auch für die Verklebung von temperatursensitiven Materialien geeignet ist.

Wesentlich für die positiven Eigenschaften der erfindungsgemäßen Polyolefine ist/sind die spezielle Polymerzusammensetzung bzw. die speziellen Materialeigenschaften des eingesetzten Basispolymers. Dieses enthält zwischen 50 und 75 ma-% Propylen, bevorzugt 52 bis 72 ma-%, besonders bevorzugt 55 bis 70 ma-% und insbesondere bevorzugt 57 bis 68 ma-%. Der (ebenfalls durch ¹³C-NMR-Spektroskopie bestimmte) Gesamtgehalt an Ethylentriaden im erfindungsgemäßen Basispolymer liegt bei maximal 2,5 ma-% bezogen auf den ebenfalls über ¹³C-NMR-Spektroskopie bestimmten Ethylengehalt des Basispolymers, bevorzugt bei maximal 2,3 ma-%, besonders bevorzugt bei maximal 2,1 ma-% und insbesondere bevorzugt zwischen 0,1 und 2 ma-%, wobei weitere Vorzugsbereiche zwischen 0,15 und 1 ma-% sowie zwischen 1,1 und 1,9 ma-% liegen.

Durch den erfindungsgemäßen Anteil an Propylen werden die physikalischen Grundeigenschaften der erfindungsgemäßen modifizierten Polymere angelegt. Die erfindungsgemäßen Comonomere Ethylen und 1-Buten lassen dabei eine Feinjustierung der Kristalllinität zu, wobei besonders Ethylen hierfür besonders gut geeignet ist, da es einerseits die Kristallinität von Polypropylen besonders stark beeinflusst [S.Davison, G.L.Taylor; Br.Polym.J.; 4 (1972); 65ff.], und andererseits auch mit Poly(1-buten) keine Cokristallisation stattfindet [A. Turner-Jones; Polymer;7 (1966); 23ff]. Werden Comonomere blockartig (z. B. als Triaden) eingebaut, so sinkt ihre Effektivität als Kristallisationsstörer gegenüber einer statistischen Verteilung deutlich. Andererseits ist die Anwesenheit von geringen Mengen an Ethylenblöcken insbesondere für das Erreichen einer bestimmten Mindestflexibilität der erfindungsgemäßen unmodifizierten Polymere essentiell. Die erfindungsgemäße Kristallinität der unmodifizierten Basispolymere führt zu einer guten Materialkohäsion der erfindungsgemäß modifizierten Polymere und sorgt gleichzeitig für niedrige Nadelpenetrationswerte. Gleichzeitig wird über die Begrenzung des Propylenanteils und die spezielle Comonomermischung ein Polymer zur Verfügung gestellt, welches eine hohe Resistenz gegenüber der β-Scission (Kettenspaltung nach Wasserstoffabstraktion) aufweist, und so zu einem modifizierten Pfropfpolymer mit hoher Molmasse und hohen Funktionalisierungsraten führt. Der Gehalt an Comonomer ergibt sich für die erfindungsgemäßen Polymere als 100 ma-% minus Propylengehalt, wobei sowohl ein als auch zwei Comonomere verwendet werden können.

In der vorliegenden Erfindung handelt es sich bevorzugt bei dem Basispolymer um ein Poly(ethylen-co-propylen-co-1-buten) mit einem kombinierten Gehalt an Ethylen und 1-Buten von mindestens 15 ma-%, bevorzugt mindestens 17 ma-%, besonders bevorzugt zwischen 17 und 50 ma-% und insbesondere bevorzugt zwischen 17 und 48 ma-%, wobei weitere besonders bevorzugte Ausführungsformen einen kombinierten Gehalt an Ethylen und 1-Buten von 20 bis 34 ma-% bzw. 36 bis 46 ma-% aufweisen. Da die Löslichkeit von Polypropylen sowohl vom Molekulargewicht als auch von seiner Kristallinität abhängt, kann über Lösungsversuche ein entsprechende Fraktionierung erfolgen [A. Lehtinen; Macromol. Chem.Phys.; 195 (1994); 1539ff],
Es ist seit langem bekannt, dass sich mittels Extraktion mit Ether amorphe ataktische Anteile [J. Boor; "Ziegler-Natta Catalysts and Polymerization"; Academic Press; New York; 1979] und niedermolekulare Anteile mit geringer Kristallinität [G. Natta, I. Pasquon, A. Zambelli, G. Gatti; Makromol. Chem.; 70 (1964); 191ff] aus Polypropylenpolymeren erhalten lassen. Hoch kristalline isotaktische Polymere haben hingegen eine sehr geringe Löslichkeit sowohl in aliphatischen Lösungsmitteln wie auch in Ethern und zwar auch bei erhöhter Temperatur [B.A. Krentsel, Y.V. Kissin, V.I. Kleiner, L.L. Stotskaya; "Polymers and Copolymers of higher 1-Olefins"; S.19/20; Hanser Publ.; München; 1997]. Die löslichen Polymeranteile weisen im Allgemeinen keine bzw. nur eine sehr geringe Kristallinität auf, und zeigen keinen Schmelzpunkt [Y.V.Kissin; "Isospecific polymerization of olefins"; Springer Verlag; New York; 1985]. In Tetrahydrofuran lösliche Polypropylenoligomere weisen sehr geringe zahlenmittlere Molmassen von deutlich kleiner als 1 500 g/mol auf [H. El Mansouri, N. Yagoubi, D. Scholler, A. Feigenbaum, D. Ferrier; J. Appl. Polym. Sci.; 71 (1999); 371ff].

Die eingesetzten unmodifizierten (ungepfropften) Basispolymere bzw. ihre Mischungen mit teilkristallinen und/oder kristallinen Propylenpolymeren zeichnen sich dadurch aus, dass ihre Löslichkeit in Xylol bei Raumtemperatur (d. h. der Anteil der Polymerprobe, der sich in einem standardisierten Lösungsversuch in Xylol löst) bei mindestens 96 ma-%, bevorzugt bei mindestens 96,5 ma-%, besonders bevorzugt bei mindestens 97 ma-% und insbesondere bevorzugt bei mindestens 97,5 ma-% liegt. Dies hat den Vorteil, dass die erfindungsgemäßen Polymere ein ausgewogenes Verhältnis aus kristallinen, teilkristallinen und nichtkristallinen Polymeranteilen enthalten, die die besonderen Materialeigenschaften des erfindungsgemäßen modifizierten Polymers erst ermöglichen.

Die eingesetzten unmodifizierten (ungepfropften) Basispolymere zeichnen sich dadurch aus, dass ihre Löslichkeit in Tetrahydrofuran (THF) bei Raumtemperatur (d. h. der Anteil der Polymerprobe, der sich in einem standardisierten Lösungsversuch in Tetrahydrofuran löst) mindestens 67 ma-%, bevorzugt mindestens 68 ma-%, besonders bevorzugt mindestens 70 ma-% und insbesondere bevorzugt mindestens 72 ma-% beträgt. Dies hat den Vorteil, dass die erfindungsgemäßen Polymere bzw. Polymermischungen eine ausreichende Menge an ataktischen Polymeranteilen sowie an Polymermolekülen mit niedriger bis mittlerer Kettenklänge enthalten, was für die Flexibilität des erfindungsgemäßen modifizierten Polymers und seine Adhäsion auch vielen Polymersubstraten wichtig ist.

Die eingesetzten unmodifizierten (ungepfropften) Basispolymere zeichnen sich dadurch aus, dass ihre durch Oszillationsrheometrie bei einer Schergeschwindigkeit von 1 Hz und einer Deformation von maximal 1 % bestimmte Schmelzviskosität bei 190 °C 50 000 bis 3 000 000 mPa*s, vorzugsweise 55 000 bis 1 500 000 mPa*s, besonders bevorzugt 60 000 bis 1 000 000 mPa*s und insbesondere bevorzugt 75 000 bis 750 000 mPa*s beträgt, wobei des Weiteren die Bereiche von 100 000 bis 200 000 mPa*s, von 175 000 bis 290 000 mPa*s, von 300 000 bis 450 000 mPa*s sowie von 400 000 bis 720 000 mPa*s insbesondere bevorzugt sind. Dabei zeigen die Schmelzen der erfindungsgemäßen Basispolymere sowohl ein viskoelastisches wie auch ein strukturviskoses Verhalten.

Der Erweichungspunkt der unmodifizierten (ungepfropften) Basispolymere, gemessen mittels Ring & Kugel-Methode, beträgt 90 bis 130 °C, bevorzugt 93 bis 127 °C, besonders bevorzugt 95 bis 125 °C und insbesondere bevorzugt von 98 bis 122 °C, wobei weitere Vorzugsbereiche zwischen 98 und 105 °C, zwischen 106 und 117 °C und zwischen 118 und 121°C liegen. Dies hat den Vorteil, dass zur Modifizierung der Basispolymere insbesondere dann, wenn sie auf Basis einer Polymerschmelze durchgeführt wird, nur eine relative geringe Energiemenge notwendig ist, da die Modifizierung schon bei relativ geringen Temperaturen erfolgen kann.

Die Nadelpenetration der unmodifizierten (ungepfropften) Basispolymere liegt zwischen 10 und 25 *0,1 mm, bevorzugt zwischen 12 und 23 *0,1 mm, besonders bevorzugt zwischen 13 und 21 *0,1 mm und insbesondere bevorzugt zwischen 14 und 19 *0,1 mm. Dies hat den Vorteil, dass ein ausgewogenes Verhältnis zwischen Festigkeit (Härte) und Flexibilität vorhanden ist.

Die durch Differentialkalorimetrie (DSC) in der 2. Aufheizung bestimmte Schmelzenthalpie des unmodifizierten (ungepfropften) Basispolymers beträgt zwischen 9 und 20 J/g, bevorzugt zwischen 10 und 18 J/g, besonders bevorzugt zwischen 11 und 17 J/g und insbesondere bevorzugt zwischen 12 und 15 J/g. Dies hat den Vorteil, dass eine bestimmte Grundkohäsion vorhanden ist, auf die bei einer späteren Modifizierung bzw. Vernetzung aufgebaut werden kann.

Die durch DSC bestimmte Glasübergangstemperatur der unmodifizierten (ungepfropften) Basispolymere beträgt maximal -20 °C, bevorzugt maximal -23 °C, besonders bevorzugt maximal -25 °C und insbesondere bevorzugt weniger als -27 °C. Die erfindungsgemäßen Polymere eignen sich demnach auch für den Einsatz bei sehr niedrigen Temperaturen und weisen insbesondere eine gute Tieftemperaturflexibilität auf, was sie z. B. von entsprechenden Polymeren mit hohem bis sehr hohem Propylengehalt (T_{g} > -10 °C) unterscheidet.

Auf die oben genannten Basispolymere sind bei den erfindungsgemäßen Polyolefinen ein oder mehrere Silane aufgepfropft. Das aufzupfropfende Silan besitzt vorzugsweise olefinische Doppelbindungen sowie eine bis drei direkt mit dem Siliciumatom verbundene Alkoxygruppen. Insbesondere sind die ein oder mehreren Silane ausgewählt aus der Gruppe umfassend Vinyltrimethoxysilan (VTMO), Vinyltriethoxysilan, Vinyl-tris(2-methoxy-ethoxy)silan, 3-Methacryloxypropyltrimethoxysilan (MEMO; H₂C=C(CH₃)COO(CH₂)₃-Si(OCH₃)₃), 3-Methacryloxypropyltriethoxysilan, Vinyldimethylmethoxysilan und/oder Vinylmethyldibutoxysilan. Ganz besonders bevorzugt ist das Silan Vinyltrimethoxysilan. Über die Verwendung unterschiedlicher Silanmonomere können die Materialeigenschaften der erfindungsgemäßen modifizierten Polyolefine exakt an die jeweiligen Anforderungen der vorliegenden Anwendung angepasst werden. So lassen sich z. B. die Vernetzungsgeschwindigkeit und die Verträglichkeit gegenüber anderen Polymeren (wie z. B. Formulierungsbestandteilen) variieren.

Die mit den Silanen modifizierten Polymere weisen besondere Eigenschaften auf, die bei deren Einsatz zu den oben genannten Vorteilen führen. So beträgt die Schmelzviskosität des erfindungsgemäßen modifizierten (gepfropften) Polyolefins im unvernetzten Zustand, bestimmt mit Oszillationsrheometrie bei 1 Hz und einer Deformation von maximal 1 % bei 190 °C 1 000 bis 75 000 mPa*s, vorzugsweise 1 500 bis 65 000 mPa*s, besonders bevorzugt 2 000 bis 60 000 mPa*s und insbesondere bevorzugt 2 500 bis 55 000 mPa*s, wobei weitere Vorzugsbereiche zwischen 3 000 und 7 500, 8 000 und 15 000, 16 000 und 22 000 sowie zwischen 25 000 und 45 000 mPa*s liegen. Dabei zeigen die Schmelzen der erfindungsgemäßen modifizierten Polymere sowohl ein viskoelastisches wie auch ein strukturviskoses Verhalten. Es werden somit modifizierte Polyolefine zur Verfügung gestellt, die sich auf Grund ihrer variablen Schmelzviskosität im unvernetzten Zustand für die unterschiedlichsten Applikationsverfahren eignen, und dementsprechend auch in unterschiedlichsten Anwendungsbereichen (z. B. Schmelzklebstoffe, Dichtmassen, Formmassen, Primer usw.) zum Einsatz kommen können. Ein besonders Merkmal der erfindungsgemäßen modifizierten Polyolefine ist, dass ihre Strukturviskosität (d. h. die Abhängigkeit der Schmelzviskosität von der Schergeschwindigkeit) im unvernetzten Zustand mit steigendem Molekulargewicht zunimmt. Der Erweichungspunkt des unvernetzten erfindungsgemäßen modifizierten (gepfropften) Polyolefins, gemessen mittels Ring & Kugel-Methode, beträgt 80 bis 120 °C, bevorzugt 85 bis 117 °C, besonders bevorzugt 87 bis 115 °C und insbesondere bevorzugt von 90 bis 112 °C, wobei weitere Vorzugsbereiche zwischen 90 und 99 °C sowie zwischen 98 und 110 °C liegen. Es werden somit modifizierte Polyolefine zur Verfügung gestellt, die einerseits einen moderaten Erweichungspunkt aufweisen, d. h. bereits im unvernetzten Zustand zu einer ausreichenden Wärmestandfestigkeit einer unter Verwendung der erfindungsgemäßen modifizierten Polyolefine hergestellten Verklebung führen, andererseits aber auch eine Verarbeitung (vor allem in der Schmelze) bei moderaten Verarbeitungs- und Applikationstemperaturen zulassen, und somit auch für temperatursensitive Anwendungen geeignet sind.
Die Nadelpenetration des unvernetzten erfindungsgemäßen modifizierten Polyolefins beträgt zwischen 10 und 40 *0,1 mm, bevorzugt zwischen 12 und 35*0,1mm, besonders bevorzugt zwischen 14 und 32*0,1mm und insbesondere bevorzugt zwischen 17 und 30* 0,1mm. Es werden somit modifizierte Polyolefine zur Verfügung gestellt, die im unvernetzten Zustand eine gute Balance zwischen Festigkeit/Härte und Flexibilität aufweisen.
Die Zugfestigkeit der erfindungsgemäßen modifizierten Polyolefine liegt (ohne weitere Zusätze) im unvernetzten Zustand zwischen 0,5 und 7 MPa, bevorzugt zwischen 0,6 und 6,5 MPa, besonders bevorzugt zwischen 0,7 und 6,0 MPa und insbesondere bevorzugt zwischen 0,75 und 5,5 MPa, wobei weitere Vorzugsbereiche zwischen 0,8 und 1,5 MPa, zwischen 1,3 und 2,5 MPa, zwischen 2,0 und 3,5 MPa sowie zwischen 2,5 und 5,0 MPa liegen. Dadurch wird insbesondere eine hohe Grundkohäsion im unvernetzten Zustand gewährleistet. Die im Zugversuch ermittelte Reißdehnung der erfindungsgemäßen, modifizierten Polyolefine liegt (ohne weitere Zusätze) im unvernetzten Zustand zwischen 75 und 1 000 %, bevorzugt zwischen 90 und 950 %, besonders bevorzugt zwischen 100 und 900 % und insbesondere bevorzugt zwischen 110 und 800 % wobei weitere Vorzugsbereiche zwischen 200 und 450 %, zwischen 350 und 600 % sowie zwischen 500 und 750 % liegen. Dadurch werden modifizierte Polyolefine zur Verfügung gestellt, die im unvernetzten Zustand über ein hohes Maß an Flexibilität verfügen.

Die Zugfestigkeit der erfindungsgemäßen modifizierten Polyolefine im vernetzten Zustand ohne weitere Zusätze und nach einer Lagerdauer der Norm-Prüfkörper von 40 Tagen im Klimaschrank bei 20 °C und 65 % relativer Luftfeuchte, liegt um mindestens 50 % höher, als im unvernetzten Zustand, bevorzugt um mindestens 60 % höher, besonders bevorzugt um mindestens 75 % höher, und insbesondere bevorzugt um mindestens 100 % höher, wobei nach 40 Tagen Lagerung als Zugfestigkeit ein Wert von mindestens 2,0 MPa, bevorzugt von mindestens 2,5 MPa, besonders bevorzugt von mindestens 2,75 MPa und insbesondere bevorzugt von mindestens 3,0 MPa erreicht wird. In einer besonderen Ausführungsform, insbesondere wenn der durch Röntgenfluoreszenzspektroskopie (RFA-Spektroskopie) bestimmte Siliziumgehalt > 0,5 ma-%, bevorzugt > 0,6 ma-% und besonders bevorzugt > 0,7 ma-% beträgt, und die durch Oszillationsrheometrie bestimmte Schmelzviskosität des unvernetzten Polymers bei 190 °C (1 Hz, 1% Deformation) < 10 000 mPa*s, bevorzugt < 7 500 mPa*s, besonders bevorzugt < 5 000 mPa*s und insbesondere bevorzugt < 4 000 mPa*s beträgt, liegt die Zugfestigkeit der erfindungsgemäßen modifizierten Polyolefine im vernetzten Zustand ohne weitere Zusätze und nach einer Lagerdauer der Norm-Prüfkörper von 40 Tagen im Klimaschrank bei 20 °C und 65 % relativer Luftfeuchte, um mindestens 150 %, bevorzugt um mindestens 200 %, besonders bevorzugt um mindestens 250 % und insbesondere bevorzugt um mehr als 300 % über dem im unvernetzten Zustand erzielten Wert. In diesem Fall liegt die Zugfestigkeit der erfindungsgemäßen modifizierten Polyolefine (ohne weitere Zusätze) im vernetzten Zustand nach einer Lagerdauer des Normprüfkörpers von 40 Tagen im Klimaschrank bei 20 °C und 65 % relativer Luftfeuchte bevorzugt bei mindestens 3,5 MPa. Es werden somit modifizierte Polyolefine zur Verfügung gestellt, die auf Grund ihrer spezifischen Materialcharakteristika wie z. B. einem sehr hohen Pfropfgrad (bei gleichzeitig niedriger Schmelzviskosität im unvernetzten Zustand) durch Vernetzung der reaktiven Gruppen zu Verbindungen mit sehr hoher Festigkeit aushärten können.
In einer besonderen Ausführungsform nimmt die im Zugversuch ohne weitere Zusätze und nach einer Lagerdauer von 40 Tagen im Klimaschrank bei 20 °C und 65 % relativer Luftfeuchte ermittelte Reißdehnung der erfindungsgemäßen modifizierten Polyolefine (Norm-Prüfkörper), trotz der Vernetzung zu, und liegt im vernetzten Zustand bei mindestens 110 %, bevorzugt bei mindestens 120 %, besonders bevorzugt zwischen 130 und 500 % und insbesondere bevorzugt zwischen 150 und 400 %, des im unvernetzten Zustand erreichten Wertes. Die erfindungsgemäßen Polymere weisen also trotz der bei Lagerung eintretenden Vernetzung und der damit verbundenen Erhöhung der Materialkohäsion (siehe Zugfestigkeit) auch nach der Vernetzung eine hohe Flexibilität auf, wobei diese durch die Copolymerzusammensetzung des verwendeten Basispolymers, über den verwendeten Initiator bzw. die verwendeten Initiator-Pfropfmonomer-Kombination, über das Mengenverhältnis von Initiator zu Pfropfmonomer sowie über die Reaktionsbedingungen (insbesondere Verweilzeit und Reaktionstemperatur) individuell an die gegebenen Anforderungen angepasst werden kann. In einer weiteren besonders bevorzugten Ausführungsform sinkt die Reißdehnung mit fortschreitender Vernetzung (Lagerdauer) kontinuierlich ab, wobei nach 40 Tagen Lagerung der Norm-Prüfkörper im Klimaschrank bei 20 °C und 65 % rel. Luftfeuchtigkeit eine Reißdehnung erreicht wird, die mindestens 50 % des im unvernetzten Zustand erreichten Wertes entspricht, bevorzugt mindestens 55 %, besonders bevorzugt mindestens 60 % und insbesondere bevorzugt mindestens 65 %.
Durch die Vernetzung kann die Flexibilität der erfindungsgemäßen modifizierten Polymere somit sowohl gesteigert, als auch reduziert werden, je nachdem was für ein Anforderungsprofil vorliegt. Die erfindungsgemäßen modifizierten Polyolefine weisen (nach vollständiger Abtrennung von unreagiertem Restmonomer) einen durch RFA-Spektroskopie (Röntgenfluoreszenzspektroskopie) bestimmten Siliziumgehalt von mindestens 0,3 ma-%, bevorzugt von mindestens 0,35 ma-%, besonders bevorzugt von mindestens 0,4 ma-% und insbesondere bevorzugt von 0,45 - 2 ma-% auf, wobei weitere besonders bevorzugte Bereiche zwischen 0,5 und 0,75 ma-%, zwischen 0,7 und 0,95 ma-%, zwischen 0,8 und 1,25 ma-% und zwischen 1,1 und 2 ma-% liegen.

Polyolefine mit den genannten bevorzugten Eigenschaften eignen sich in ganz besonderer Weise für Verklebungen, insbesondere für den Einsatz als oder in Heißschmelzklebstoffen und zeigen vorteilhafte Eigenschaften gegenüber bekannten Systemen. Dies gilt insbesondere für ihre ausgezeichnete Haftung auf unbehandelten Polyolefinen, insbesondere auf unbehandeltem Polypropylen sowie Papier/Pappe, Holz, Glas und oder Metallen, insbesondere Aluminium.

Ein weiterer Gegenstand der vorliegenden Erfindung sind Verfahren zur Herstellung eines erfindungsgemäßen modifizierten Polyolefins, dadurch gekennzeichnet, dass ein teilkristallines Polyolefin mit einem durch ¹³C-NMR-Spektroskopie bestimmten Gehalt an Propylen von 50 bis 75 ma-% und mit einem durch ¹³C-NMR-Spektroskopie bestimmten Gehalt an Ethylentriaden von maximal 2,5 ma-%, bezogen auf den ebenfalls durch ¹³C-NMR-Spektroskopie bestimmten Gehalt an Ethylen sowie einer mittels DSC (2. Aufheizung) bestimmten Schmelzenthalpie von 9 bis 20 J/g und einer Löslichkeit in Xylol bei Raumtemperatur (d.h. der Anteil der Polymerprobe, der sich in einem standardisierten Lösungsversuch in Xylol löst) von mindestens 96 ma-% sowie einer Löslichkeit in Tetrahydrofuran (THF) bei Raumtemperatur (d. h. der Anteil der Polymerprobe, der sich in einem standardisierten Lösungsversuch in Tetrahydrofuran löst) von mindestens 67 ma-% mit mindestens einem Radikalstarter und einem oder mehreren Silanen in Kontakt gebracht wird, woraufhin eine Pfropfreaktion der ein oder mehreren Silane auf das Polyolefin stattfindet.

Die Herstellung des erfindungsgemäßen Basispolymers erfolgt durch Polymerisation der genannten Monomere.

Die erfindungsgemäßen Polymere sind beispielsweise durch Polymerisation von Propylen wahlweise mit Ethylen und/oder 1-Buten mit einem TiCl₃ • (AlCl₃)ₙ-Mischkatalysator (n = 0,2 bis 0,5) erhältlich, wobei eine Trialkylaluminiumverbindung als Cokatalysator eingesetzt wird. Das Monomer Ethen wird gasförmig eingesetzt, während die Monomere Propen und 1-Buten sowohl gasförmig als auch flüssig eingesetzt werden können. Als Molmassenregler kann beispielsweise gasförmiger Wasserstoff verwendet werden. Die Polymerisation wird bevorzugt in einem inerten Lösungsmittel durchgeführt, welches z. B. aus der Gruppe der aliphatischen Kohlenwasserstoffe ausgewählt ist. Eine Polymerisation im vorgelegten Monomer ist ebenfalls möglich. Die Polymerisation wird entweder in einem Rührkessel oder in einer Rührkesselkaskade durchgeführt. Die Reaktionstemperatur liegt zwischen 30 und 200 °C. Die erfindungsgemäßen Polymerisate können dem Stand der Technik entsprechend entweder in Form ihrer Reaktionslösung oder zu einem späteren Zeitpunkt chemisch stabilisiert werden, um sie vor dem schädigenden Einfluss z. B. von Sonneneinstrahlung, Luftfeuchtigkeit und Sauerstoff zu schützen. Dabei können beispielsweise Stabilisatoren, die gehinderte Amine (HALS-Stabilisatoren), gehinderte Phenole, Phosphite und/oder aromatische Amine enthalten (wie z. B. Tetrakis(methylen-(3,5-ditertbutyl-4-hydroxyhydrocinnamat) und/oder 2,4,8,10-Tetraoxa-3,9-diphosphaspiro-3,9bis(octydecyl)[5,5]undecan), zum Einsatz kommen. Besonders bevorzugt werden solche Stabilisatoren eingesetzt, die nur eine hydrolytisch aktive Endgruppe enthalten. Die wirksame Menge an Stabilisatoren liegt dabei im Bereich von 0,1 bis 2 Gew.-%, bezogen auf das Polymer.

Geeignete Silane zur Pfropfung sind vorab bei der Beschreibung der Olefine genannt, vorzugsweise handelt es sich um jene aus der Gruppe umfassend Vinyltrimethoxysilan, Vinyltriethoxysilan, Vinyl-tris(2-methoxy-ethoxy-)silan, 3-Methacryloxypropyltrimethoxysilan, 3-Methacryloxypropyltriethoxysilan, Vinyldimethylethoxysilan und/oder Vinylmethyldibutoxysilan, insbesondere Vinyltrimethoxysilan. Das Silan wird bei der Pfropfung üblicherweise in Mengen von 0,1 bis 20 Gew.-%, vorzugsweise 0,5 bis 17 Gew.-%, besonders bevorzugt von 0,75 bis 15 Gew.-% und insbesondere bevorzugt von 1 bis 14 Gew.-%, bezogen auf das Basispolymer, eingesetzt, wobei weitere besonders bevorzugte Bereiche zwischen 0,75 und 5,5 Gew.-%, zwischen 3,5 und 7,5 Gew.-%, zwischen 7 und 9,75 Gew.-% sowie zwischen 9,5 und 13,75 Gew.-% liegen.

Die ein oder mehreren Silane können auf das Basispolymer nach allen Methoden des Standes der Technik aufgepfropft werden, beispielsweise in Lösung oder bevorzugt in der Schmelze, wobei ein bzw. mehrere Radikalspender in ausreichender Menge eingesetzt wird/werden. Eine geeignete Arbeitsweise kann der DE-OS 40 00 695 entnommen werden, auf die ausdrücklich Bezug genommen wird. Beispielsweise können folgende Radikalspender verwendet werden: Diacylperoxide wie z. B. Dilaurylperoxid oder Didecanoylperoxid, Alkylperester wie z. B. tert-Butylperoxy-2-ethylhexanoat, Perketale wie z. B. 1,1-Di(tert-butylperoxy)-3,3,5-trimethylcyclohexan oder 1,1-Di(tert-butylperoxy)cyclohexan, Dialkylperoxide wie z. B. tert-Butylcumylperoxid, Di(tert.butyl)peroxid oder Dicumylperoxid, C-Radikalspender wie z. B. 3,4-Dimethyl-3,4-diphenylhexan oder 2,3-Dimethyl-2,3-diphenylbutan sowie Azoverbindungen wie z. B. Azobisisobutyronitril, 2,2'-Azo-di(2-acetoxypropan) usw. Das Aufpfropfen erfolgt insbesondere bei einer Temperatur von 30 bis 250 °C.
In einer besonderen Ausführungsform handelt es sich um ein Lösungsverfahren, wobei aliphatische und/oder aromatische Kohlenwasserstoffe sowie cyclische Ether als Lösungsmittel eingesetzt werden können. Besonders bevorzugt wird als Lösungsmittel mindestens ein aromatischer Kohlenwasserstoff eingesetzt. Geeignete aromatische Kohlenwasserstoffe sind insbesondere Trichlorbenzol, Dichlorbenzol, Toluol und Xylol, besonders bevorzugt wird Xylol eingesetzt. Besonders bevorzugte aliphatische Kohlenwasserstoffe sind beispielsweise Propan, n-Butan, Hexan, Heptan, Cyclohexan und Octan. Besonders bevorzugter cyclischer Ether ist Tetrahydrofuran (THF).

Werden Ether, insbesondere cyclische Ether als Lösungsmittel verwendet, so müssen der verwendete Initiator sowie die Reaktionsbedingungen mit besondere Sorgfalt ausgewählt werden, um die Bildung von explosiven Peroxiden der verwendeten Ether zu unterbinden bzw. zu kontrollieren. Insbesondere ist der zusätzliche Einsatz spezieller Inhibitoren (z. B. IONOL) zu erwägen.

Im Fall eines Pfropfprozesses in Lösung liegt die Konzentration des eingesetzten Basispolymers bei mindestens 10 ma-%, bevorzugt bei mindestens 15 ma-%, besonders bevorzugt bei mindestens 20 ma-% und insbesondere bevorzugt bei mindestens 22,5 ma-%. Die Reaktionstemperatur des Pfropfprozesses in Lösung liegt bei 30 bis 200 °C, bevorzugt bei 40 bis 190 °C, besonders bevorzugt bei 50 bis 180 °C und insbesondere bevorzugt bei 55 bis 140 °C. Die Lösungspfropfung erfolgt entweder in diskontinuierlicher oder in kontinuierlicher Weise. Im Fall einer diskontinuierlichen Reaktionsführung wird zunächst das feste Polymer (z. B. als Granulat, Pulver usw.) im verwendeten Lösungsmittel gelöst. Alternativ dazu wird direkt eine konditionierte Polymerisationslösung aus dem Herstellverfahren des Basispolymers verwendet, und auf Reaktionstemperatur gebracht. Es folgt die Zugabe des Monomers/der Monomeren und der/des Radikalstarter(s). In einer besonders bevorzugten Ausführungsform werden Lösungsmittel Basispolymere(e) und Monomer(e) vorgelegt und auf Reaktionstemperatur gebracht, während der/die Radikalstarter über einen definierten Zeitraum kontinuierlich zudosiert wird/werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt. In einer weiteren besonders bevorzugten Ausführungsform werden Lösungsmittel und Basispolymer(e) vorgelegt und auf Reaktionstemperatur gebracht, während Monomer(e) und Radikalstarter -gemeinsam (z. B. in Form einer Mischung) oder voneinander getrennt- über einen definierten Zeitraum kontinuierlich zudosiert werden. Dies hat den Vorteil, dass sowohl die stationäre Radikalkonzentration als auch die Monomerkonzentration am Reaktionsort niedrig ist, was sowohl die Kettenspaltung als auch die Bildung von Homopolymeren zurückdrängt. Dies ist insbesondere bei der Verwendung von Monomeren wichtig, die bei Reaktionstemperatur stark zur thermisch initiierten (Homo)polymerisation neigen. Ganz besonders bevorzugt wird im Anschluss an die unterschiedlichen definierten Zudosierungszeiträume eine weitere Menge an Radikalstarter(n) zudosiert, um den Gehalt an Restmonomeren in der Reaktionslösung zu minimieren. Als Reaktor wird bevorzugt ein Rührkessel verwendet, die Verwendung alternativer Reaktionsbehälter wie z. B. diskontinuierlicher Knetreaktoren ist ebenfalls möglich, und insbesondere bei niedrigen Reaktionstemperaturen und/oder hohen Polymerkonzentrationen bevorzugt.
Im Fall einer kontinuierlichen Reaktionsführung wird zunächst in einem oder mehreren Vorlagebehältern (z. B. Rührkesseln) das feste Polymer in mindestens einem Lösungsmittel gelöst und anschließend kontinuierlich in den/die Reaktionsbehälter dosiert. In einer alternativen, ebenfalls besonders bevorzugten Ausführungsform, wird direkt eine konditionierte Polymerlösung aus einem Herstellprozess des Basispolymers verwendet. In einer weiteren ebenfalls besonders bevorzugten Ausführungsform wird das feste Polymer (z. B. in Form von Pulver, Granulat, Pellets usw.) zusammen mit mindestens einem Lösungsmittel kontinuierlich in eine (ein- oder mehrwellige) Schneckenmaschine oder einen Kontikneter dosiert, unter Einwirkung von Temperatur und/oder Scherung gelöst, und anschließend kontinuierlich in den/die Reaktionsbehälter dosiert. Als Reaktionsbehälter bzw. Reaktoren für die Durchführung der kontinuierlichen Pfropfreaktion in Lösung kommen kontinuierliche Rührkessel, Rührkesselkaskaden, Strömungsrohre, Strömungsrohre mit Zwangsförderung (z. B. Schneckenmaschinen), Reaktionskneter sowie deren beliebige Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden können. Besonders bevorzugt werden zwei- und/oder mehrwellige Extruder eingesetzt. Insbesondere bevorzugt zur kontinuierlichen Herstellung der erfindungsgemäßen modifizierten Polymere in Lösung ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/Abbauprodukten erfolgt.

Alternativ bevorzugt handelt es sich um ein Schmelzeverfahren, wobei mindestens ein Radikalstarter direkt in die Schmelze dosiert wird. Insbesondere liegt bei dieser Verfahrensvariante die Temperatur der Polymermasse zum Zeitpunkt der Zudosierung mindestens eines Radikalstarters oberhalb der SADT (Self accelerating decompositon temperature = Temperatur oberhalb der eine selbstbeschleunigende Zersetzung einsetzen kann) mindestens eines der zudosierten Radikalstarter. Die Reaktionstemperatur des Pfropfprozesses in der Schmelze liegt bei 160 bis 250 °C, bevorzugt bei 165 bis 240 °C, besonders bevorzugt bei 168 bis 235 °C und insbesondere bevorzugt bei 170 bis 230 °C.
Die Schmelzepfropfung erfolgt entweder in diskontinuierlicher oder in kontinuierlicher Fahrweise. Im Fall einer diskontinuierlichen Reaktionsführung wird das feste Polymer (z. B. als Granulat, Pulver, Pellets usw.) zunächst aufgeschmolzen und gegebenenfalls homogenisiert. Alternativ wird direkt eine konditionierte Polymerschmelze aus einem Polymerisationsprozess verwendet und auf Reaktionstemperatur gebracht. Es folgt die Zugabe von Monomer(en) und Radikalstarter(n).
In einer besonderen Ausführungsform werden Monomer(e) und Polymerschmelze homogen durchmischt und auf Reaktionstemperatur gebracht, während der/die Radikalstarter über einen definierten Zeitraum kontinuierlich zudosiert werden. Dies hat den Vorteil, dass die stationäre Radikalkonzentration niedrig ist, und daher das Verhältnis von Pfropfreaktion zu Kettenspaltung besonders günstig (d.h. mehr Pfropfreaktion und weniger Kettenspaltung) ausfällt.
In einer weiteren besonders bevorzugten Ausführungsform wird die Polymerschmelze vorgelegt und homogenisiert, während Monomer(e) und Radikalstarter gemeinsam (z. B. in Form einer Mischung) oder getrennt über einen definierten Zeitraum kontinuierlich zudosiert werden. Dies hat den Vorteil, dass sowohl die stationäre Radikalkonzentration, als auch die Monomerkonzentration am Reaktionsort niedrig bleibt, was sowohl die Kettenspaltung als auch die Bildung von Homopolymer zurückdrängt. Letzteres ist besonders bei der Verwendung von Monomeren wichtig, die bei der vorliegenden Reaktionstemperatur zur thermischen (Homo)polymerisation neigen. Als Reaktor wird bevorzugt ein Rührkessel mit wandgängigem Rühraggregat oder ein Reaktionskneter verwendet.
Im Fall einer kontinuierlichen Reaktionsführung wird zunächst in einem oder mehreren Vorlagebehältern (z. B. Rührkesseln) das feste Polymer aufgeschmolzen und anschließend kontinuierlich in den/die Reaktionsbehälter dosiert. In einer alternativen, ebenfalls besonders bevorzugten Ausführungsform, wird direkt eine konditionierte Polymerschmelze aus einem Polymerisationsprozess verwendet. In einer weiteren ebenfalls besonders bevorzugten Ausführungsform wird das feste Polymer (z. B. in Form von Pulver, Granulat, Pellets usw.) kontinuierlich in eine (ein- oder mehrwellige) Schneckenmaschine oder einen Kontikneter dosiert, unter Einwirkung von Temperatur und/oder Scherung aufgeschmolzen, und anschließend kontinuierlich in den/die Reaktionsbehälter dosiert. Als Reaktionsbehälter bzw. Reaktoren für die Durchführung der kontinuierlichen Pfropfreaktion in der Schmelze kommen kontinuierliche Rührkessel, Rührkesselkaskaden, Strömungsrohre, Strömungsrohre mit Zwangsförderung (z. B. Schneckenmaschinen), Reaktionskneter sowie deren beiliege Kombinationen in Frage. Werden Strömungsrohre mit Zwangsförderung eingesetzt, so handelt es sich dabei bevorzugt um Extruder, wobei sowohl ein-, zwei- wie auch mehrwellige Extruder eingesetzt werden. Besonders bevorzugt werden zwei- und/oder mehrwellige Extruder eingesetzt. Insbesondere bevorzugt zur kontinuierlichen Herstellung der erfindungsgemäßen modifizierten Polymere in der Schmelze ist die Verwendung einer Reaktorkombination aus Strömungsrohr, Strömungsrohr mit Zwangsförderung und kontinuierlichem Rührkessel in beliebiger Reihenfolge, wobei bevorzugt entweder im Strömungsrohr mit Zwangsförderung oder im kontinuierlichen Rührkessel auch die Entfernung von Restmonomeren und flüchtigen Neben-/ Abbauprodukten erfolgt.

Die erfindungsgemäßen modifizierten Polymere eignen sich im vernetzten oder unvernetzten Zustand für den Einsatz in oder als Formmassen, Schutzmassen, Klebstoffe, Markierungsmassen, Beschichtungsmassen, Dichtungsbahnen oder Dachbahnen, Primer, Primerformulierungen, Haftvermittlerformulierungen, Dispersionen, Suspensionen und/oder Emulsionen. Dementsprechend sind die Verwendung der erfindungsgemäßen modifizierten Polyolefine in den genannten Einsatzgebieten und entsprechende Formmassen, Schutzmassen, Klebstoffe, Markierungsmassen, Beschichtungsmassen, Dichtungsbahnen oder Dachbahnen, Primer oder Primerformulierungen, Haftvermittlerformulierungen, Dispersionen, Suspensionen und/oder Emulsionen enthaltend die erfindungsgemäßen Polyolefine ebenfalls Gegenstand der vorliegenden Erfindung.

Die erfindungsgemäßen Polyolefine eignen sich in besonderer Weise zur Verwendung als und/oder in Formmassen. Darüber hinaus können die Formmassen weitere Bestandteile enthalten. Die weiteren Bestandteile können insbesondere andere Polymere umfassen, wobei es sich bei diesen anderen Polymeren um ein oder mehrere Ethylenpolymerisate, und/oder isotaktische Propylenpolymerisate und/oder syndiotaktische Propylenpolymerisate und/oder isotaktische Poly-1-buten-Polymerisate und/oder syndiotaktische Poly-1-buten-Polymerisate handeln kann. Vorzugsweise handelt es sich dabei um Formmassen die außer mindestens einem erfindungsgemäßen Polymer ein weiteres modifiziertes und/oder unmodifiziertes Polyolefin, insbesondere Polypropylen und/oder Füllstoffe und/oder Verstärkungsmaterialien wie z. B. Glasfasern enthalten.

Die erfindungsgemäßen modifizierten Polyolefine eignen sich in besonderer Weise zur Verwendung als und/oder in Schutzmassen. Vorzugsweise handelt es sich dabei um Schutzmassen die außer mindestens einem erfindungsgemäßen Polymer ein weiteres modifiziertes und/oder unmodifiziertes Polyolefin, insbesondere Polypropylen und/oder Füllstoffe und/oder Verstärkungsmaterialien wie z. B. Glasfasern enthalten. Insbesondere handelt es sich bei den erfindungsgemäßen Schutzmassen um solche, die im Automobilbereich eingesetzt werden. Ganz besonders bevorzugt handelt es sich um Unterbodenschutzmassen (PVC-Plastisol Ersatz).

Die erfindungsgemäßen modifizierten Polyolefine eignen sich in besonderer Weise zur Verwendung als und/oder in Klebstoffen.

Zur Einstellung der für den Klebstoffanwender notwendigen Eigenschaften wie Klebkraft, Anfangshaftung, Vernetzungsgeschwindigkeit, Vernetzungsdichte, Viskosität, Härte, Elastizität, Temperatur- und Oxidationsstabilität usw. können den erfindungsgemäßen Polyolefinen weitere Substanzen zugesetzt werden, die üblicherweise zur Einstellung der gewünschten Klebstoffeigenschaften verwendet werden. Dabei ist naturgemäß darauf zu achten, dass in den Zuschlagsstoffen enthaltenes Wasser die Vernetzungsgeschwindigkeit des erfindungsgemäßen Klebstoffes erhöhen kann. Besonders charakteristisch für die vorliegende Erfindung ist, dass über die Silangruppen der erfindungsgemäßen Polymere eine reaktive Anbindung an die verwendeten Zuschlagsstoffe erfolgen kann. Insbesondere werden eingesetzte Füllstoffe und/oder Verstärkungsmaterialien (z. B. Fasern) durch die in den erfindungsgemäßen Polymeren enthaltenen Silangruppen reaktiv an die Polymermatrix angebunden, was zu besonders vorteilhaften Materialeigenschaften, insbesondere einer hohen Materialkohäsion (Zugfestigkeit) und einer sehr hohen Ausreißfestigkeit bei Faserverstärkungen führt.

Ein weiteres wesentliches Charakteristikum der erfindungsgemäßen modifizierten Polyolefine ist, dass neben Füllstoffen auch eine chemische Anbindung des Klebstoffes/Klebstoffbestandteils an die zu verklebenden Oberflächen erfolgen kann. Dies führt zu einer besonders guten Haftung und Klebkraft bei Oberflächen, die über entsprechende reaktive Gruppen (z. B. - OH) verfügen. Neben der reaktiven Anbindung ist weiterhin eine besonders hohe Klebkraft auf Oberflächen zu erzielen, die über eine ähnliche Oberflächenpolarität wie die erfindungsgemäßen modifizierten Polyolefine verfügen (z. B. Poly(1-buten), Polypropylen, Polyethylen usw.).

In den erfindungsgemäßen Klebstoffformulierungen können neben den erfindungsgemäßen modifizierten Polyolefinen weitere Bestandteile enthalten sein. Bei den weiteren Bestandteilen kann es sich insbesondere bei Lösungsformulierungen um cyclische und/oder lineare aliphatische und/oder aromatische Kohlenwasserstoffe mit oder ohne Heteroatome handeln, auch um entsprechende halogenierte Kohlenwasserstoffe. Vorzugsweise werden aber keine halogenierten Kohlenwasserstoffe verwendet. In den bei Raumtemperatur flüssigen Klebstoffformulierungen haben die genannten Kohlenwasserstoffe vorzugsweise einen Formulierungsanteil von maximal 90 ma-% bevorzugt maximal 80 ma-%, besonders bevorzugt maximal 75 ma-%, und insbesondere bevorzugt von maximal 50 ma-%.

Ganz besonders bevorzugt handelt es sich bei der erfindungsgemäßen Klebstoffformulierung um eine Heißschmelzklebstoffformulierung, die für alle dem Fachmann bekannten Arten von Verklebungen eingesetzt werden kann.

Die erfindungsgemäße Heißschmelzklebstoffformulierung kann weitere Bestandteile enthalten, die zur Erzielung spezieller Eigenschaften, wie z. B. Verformungsfähigkeit, Haftungsvermögen, Verarbeitungsfähigkeit, Vernetzungsgeschwindigkeit, Vernetzungsdichte, (Schmelz- bzw. Lösungs-) Viskosität, Festigkeit, Kristallisationsgeschwindigkeit, Klebrigkeit, Lagerstabilität usw. notwendig sind. Der Anteil der weiteren Bestandteile liegt in einer besonderen Ausführungsform der vorliegenden Erfindung insbesondere bevorzugt bei maximal 10 ma-%. Dies hat den Vorteil, dass die Materialeigenschaften der Klebstoffformulierung im Wesentlichen die des verwendeten erfindungsgemäßen Polymers sind. Eine solche Klebstoffformulierung lässt sich mit sehr geringem Aufwand herstellen.

Alternativ kann in einer weiteren Ausführungsform der vorliegenden Erfindung der Anteil der weiteren Bestandteile > 10 ma-% betragen. In diesem Falle machen die weiteren Bestandteile maximal 80 ma-% der Gesamtformulierung, bevorzugt maximal 60 ma-%, besonders bevorzugt maximal 50 ma-%, insbesondere bevorzugt maximal 40 ma-% aus.

Bei den weiteren Bestandteilen kann es sich um Vernetzungsbeschleuniger, insbesondere um Silanolkondensationskatalysatoren, um anorganische und/oder organische Füllstoffe, die wahlweise elektrisch leitfähig oder isolierend sein können, anorganische und/oder organische Pigmente, die wahlweise elektrisch leitfähig oder isolierend sein können, synthetische und/oder natürliche Harze, insbesondere Klebharze, synthetische und/oder natürliche Öle, anorganische und/oder organische, synthetische und/oder natürliche Polymere, die wahlweise elektrisch leitfähig oder isolierend sein können, anorganische und/oder organische, synthetische und/oder natürliche Fasern, die wahlweise elektrisch leitfähig oder isolierend sein können, anorganische und/oder organische Stabilisatoren und/oder anorganische und/oder organische Flammschutzmittel handeln.

Insbesondere umfassen die weiteren Bestandteile Harze, wobei die Harze eingesetzt werden, um bestimmte Eigenschaften der Klebschicht, insbesondere die Klebrigkeit und/oder Haftung, das Fließ- und Kriechverhalten der Klebschicht und/oder die Klebstoffviskosität an besondere Anforderungen anzupassen. Es kann sich dabei um Naturharze und/oder Kunstharze handeln. Im Falle von Naturharzen enthalten diese Naturharze als Hauptbestandteil Abietinsäure (z. B. Kollophonium). Weiterhin kann es sich bei den Harzen um Terpen- bzw. Polyterpenharze, Petroleumharze und/oder Kumaron-Inden-Harze handeln, wobei es sich insbesondere um sogenannte C₅-Harze und/oder Cg-Harze und/oder um Mischpolymerisate aus C₅-/C₉-Harzen handelt. Der Anteil der Harze in der erfindungsgemäßen Heißschmelzklebstoffformulierung beträgt insbesondere maximal 45 ma-%, bevorzugt zwischen 1 und 40 ma-%, besonders bevorzugt zwischen 2 und 30 ma-% und insbesondere bevorzugt zwischen 3 und 20 ma-%, bezogen auf die Gesamtformulierung.

Weiterhin können in den erfindungsgemäßen Heißschmelzklebstoffformulierungen klassische amorphe (bzw. teilkristalline) Poly(α-Olefine) (sog. APAOs) als weitere Bestandteile enthalten sein. Bei den genannten amorphen (bzw. teilkristallinen) Poly(α-Olefinen) kann es sich um Homo-/Co- und/oder Terpolymere aus Ethylen, Propylen, 1-Buten bzw. linearen und/oder verzweigten 1-Olefinen mit 5-20 Kohlenstoffatomen handeln, welche z. B. durch klassische Ziegler-Natta-Katalyse oder Metallocenkatalyse erhältlich sind. Der Anteil der amorphen Poly(α-Olefine) liegt insbesondere bei maximal 50 ma-%, bevorzugt bei maximal 40 ma-%, und besonders bevorzugt bei maximal 30 ma-%, bezogen auf die Gesamtformulierung. Vorzugsweise handelt es sich bei den weiteren Bestandteilen um kristalline beziehungsweise teilkristalline Polyolefine, die insbesondere isotaktisches Polypropylen, syndiotaktisches Polypropylen, Polyethylen (HDPE, LDPE und/oder LLDPE), isotaktisches Poly(1-buten), syndiotaktisches Poly(1-buten) deren Copolymere und/oder deren Copolymere mit linearen und/oder verzweigten 1-Olefinen mit 5 bis 10 Kohlenstoffatomen umfassen. Weiterhin ist bevorzugt, dass es sich bei den kristallinen bzw. teilkristallinen Polyolefinen um chemisch modifizierte Polyolefine handelt, wobei die chemische Modifizierung insbesondere solche durch Maleinsäureanhydrid, Itaconsäureanhydrid, Acrylsäure, Acrylate, Methacrylate, ungesättigte Epoxyverbindungen, Silanacrylate, Silane und Hydroxyalkylsilane umfasst.

Weiterhin können die weiteren Bestandteile Polymere mit polaren Gruppen umfassen. Polymere mit polaren Gruppen umfassen Polystyrolcopolymere ( z. B. mit Maleinsäureanhydrid, Acrylnitril usw.), Polyacrylate, Polymethacrylate, (Co)polyester, Polyurethane, (Co)polyamide, Polyetherketone, Polyacrylsäure, Polycarbonate sowie chemisch modifizierte Polyolefine (wie z. B. Poly(propylen-graft-maleinsäureanhydrid) oder Poly(propylen-graft-alkoxyvinylsilan). Dabei kann es bei der Vermischung der erfindungsgemäßen Polymere mit den polare Gruppen enthaltenden Polymeren zu einer sofortigen und/oder zeitverzögerten reaktiven Anbindung der Polymerketten kommen, die vorzugsweise dazu führt, dass eine verbesserte Verträglichkeit zwischen den beiden Polymerphasen eintritt, was beispielsweise in einer Verschiebung der Glasübergangstemperaturen der verwendeten Polymere zu erkennen ist. Besonders bevorzugt führt die reaktive Anbindung dazu, dass die Polymerphasen eine gemeinsame Glasübergangstemperatur zeigen, also eine makroskopische Mischbarkeit aufweisen.

Weiterhin können die weiteren Bestandteile Homo- und/oder Copolymere (oder auch Oligomere) auf Basis von Ethylen, Propylen, Butadien, Styrol und/oder Acrylnitril umfassen, welche als weitere Comonomere ein Dien und/oder ein cyclisches Dien, Butadien, Styrol und/oder Isopren umfassen können, insbesondere handelt es sich bei diesen Polymeren um Blockcopolymere, insbesondere um Kautschuke wie z. B. Natur- und Synthesekautschuk, Poly(butadien), Poly(isopren), Styrol-Butadien-Kautschuk, Styrol-Isopren-Kautschuk und Nitrilkautschuk. Der Anteil der Polymere auf Basis von Butadien, Styrol, und/oder Isopren beträgt maximal 20 ma-%, bevorzugt 1 bis 15 ma-%, besonders bevorzugt 1,5 bis 10 ma-% und insbesondere 2 bis 9 ma-%, bezogen auf die Heißschmelzklebstoffformulierungen. Bei Oligomeren handelt es sich bevorzugt um Butadienoligomere.

Weiterhin können die weiteren Bestandteile elastomere Polymere auf Basis von Ethylen, Propylen, einem Dien und/oder cis,cis-1,5-Cyclooctadien, *exo-*Dicyclopentadien, endo-Dicyclopentadien, 1,4-Hexadien und 5-Ethyliden-2-norbornen umfassen, insbesondere handelt es sich hierbei um Ethylen-Propylen-Rubber, EPM (doppelbindungsfrei, Ethylengehalt 40 bis 75 ma-%) und/oder EPDM. Der Anteil der Polymere auf Basis von Ethylen, Propylen, einem Dien und/oder *cis*,*cis*-1,5-Cyclooctadien, *exo*-Dicyclopentadien, *endo-*Dicyclopentadien, 1,4-Hexadien und 5-Ethyliden-2-norbornen beträgt üblicherweise maximal 20 ma-%, bevorzugt 1 bis 15 ma-%, besonders bevorzugt 1,5 bis 10 ma-% und insbesondere 2 bis 9 ma-%, bezogen auf die Heißschmelzklebstoffformulierungen.

Alternativ können die weiteren Bestandteile Wachse umfassen, insbesondere modifizierte und unmodifizierte Wachse, wobei es sich bei diesen vorzugsweise um kristalline, teilkristalline und/oder amorphe Polyolefinwachse auf Basis von Polyethylen, Polypropylen und/oder Poly(1-buten), Paraffinwachse, Metallocenwachse, Mikrowachse, Polyamidwachse, Polytetrafluorethylenwachse und/oder Fischer-Tropsch-Wachse handelt. Der Anteil der Wachse beträgt maximal 50 ma-%, bevorzugt 1 bis 40 ma-%, besonders bevorzugt 2 bis 30 ma-% und insbesondere bevorzugt 3 bis 20 ma-%, bezogen auf die Heißschmelzklebstoffformulierungen.

Weiterhin können die weiteren Bestandteile Füllstoffe umfassen, wobei die Füllstoffe eingesetzt werden, um spezielle Eigenschaftsprofile der Klebschicht, wie z. B. den Temperaturanwendungsbereich, die Festigkeit, die Schrumpfung, die elektrische Leitfähigkeit, den Magnetismus und/oder die Wärmeleitfähigkeit gezielt an spezifische Anforderungen anzupassen. Allgemein handelt es sich bei den Füllstoffen um anorganische und/oder organische Füllstoffe. Die anorganischen Füllstoffe sind insbesondere ausgewählt aus Kieselsäuren (inkl. hydrophobierte Kieselsäuren), Quarzmehl, Kreiden, Titandioxid, Zinkoxid, Zirkonoxid (letztere drei vorzugsweise in nanoskaliger Form), Schwerspat, Glaspartikeln (insbesondere sphärischen Partikeln zur Erhöhung der Lichtreflexion), Glasfasern, Kohlefasern, Asbestpartikeln, Asbestfasern und/oder Metallpulvern. Organische Füllstoffe sind beispielsweise Ruß, Bitumen, vernetztes Polyethylen, vernetzte Kautschuk- bzw. Gummimischungen, synthetische Fasern wie z. B. Polyethylenfasern, Polypropylenfasern, Polyesterfasern, Polyamidfasern, Aramidfasern, Saranfasern, MP-Fasern oder Naturfasern wie Stroh, Holz, Wolle, Baumwolle, Seide, Flachs, Hanf, Jute, und/oder Sisal. Der Anteil der Füllstoffe beträgt maximal 80 ma-%, bevorzugt 1 bis 60 ma-%, besonders bevorzugt 5 bis 40 ma-% und insbesondere bevorzugt 7 bis 30 ma-%, bezogen auf die Heißschmelzklebstoffformulierungen.

Ebenfalls können die weiteren Bestandteile Vernetzungsbeschleuniger umfassen. Dies ist besonders dann bevorzugt, wenn die erfindungsgemäßen Polymere in einer Verklebung eingesetzt werden, die in kurzer Zeit nach der Fügung ihre maximale Belastbarkeit erreichen soll. Als Vernetzungsbeschleuniger eignen sich eine Vielzahl von chemischen Verbindungen, insbesondere Brönstedt- und/oder Lewissäuren wie z. B. Essigsäure, Itaconsäure, Zink(II)acetat, Cadmiumacetat, Zinkoxid, Zinkstearat, Zink(II)chlorid, Zinn(IV)chlorid, Dibutylzinnoxid, Dibutylzinndilaurat, Wismutcitrat, Wismut(III)oxid, Wismuttitanat, Tetrabutylgermanium, Tetrabutylzinn, Titanborid, Titan(IV)oxid, Titanacetylacetonat, Tributyltitanat, Natriumchlorid, Magnesium(II)chlorid, Zinkacetylacetonat, Zinkmethacrylat, Zinkniobat, Zinn(II)oxid, Zinn(IV)oxid, Zirkon(IV)acetylacetonat, Zirkon(IV)oxid und/oder Zirkon(IV)silikat.

Ebenfalls können die weiteren Bestandteile Stabilisatoren umfassen, wobei diese eingesetzt werden, um die Klebstoffformulierung vor externen Einflüssen wie z. B. dem Einfluss von (Verarbeitungs-)Wärme, Scherbeanspruchung, Sonneneinstrahlung, Luftfeuchtigkeit und Sauerstoff zu schützen. Geeignete Stabilisatoren sind beispielsweise gehinderte Amine (HALS-Stabilisatoren), gehinderte Phenole, Phosphite und/oder aromatische Amine (wie sie z. B. unter den Produktnamen IRGANOX, KINOX, DOVERNOX, WESTON, IRGAPHOS, DOVERPHOS und/oder IONOL kommerziell erhältlich sind). Besonders bevorzugt enthalten die erfindungsgemäß eingesetzten Stabilisatoren nur eine hydrolytisch aktive Endgruppe pro Molekül. In den genannten Formulierungen beträgt der Anteil der Stabilisatoren maximal 3 ma-%, bevorzugt zwischen 0,05 und 2,5 ma-% und insbesondere bevorzugt zwischen 0,1 und 2 ma-%, bezogen auf die Heißschmelzklebstoffformulierungen. In einer besonderen Ausführungsform erfolgt eine reaktive Anbindung des/der Stabilisators/Stabilisatoren an das erfindungsgemäß modifizierte Polymer, wodurch eine Stabilisatormigration aus der Klebverbindung verhindert wird.

Darüber hinaus können die weiteren Bestandteile ein oder mehrere Öle umfassen, wobei es sich um natürliche und/oder synthetische Öle handeln kann. Diese ein oder mehreren Öle haben vorzugsweise bei der Verarbeitungstemperatur eine Viskosität von 0,1 bis 1 000 mPa*s, bevorzugt von 1 bis 750 mPa*s, am meisten bevorzugt von 2 bis 500 mPa*s. Geeignete Öle sind beispielsweise Mineralöle, (medizinische) Weißöle, Isobutenöle, Butadienöle, hydrierte Butadienöle und/oder Paraffinöle. Der Anteil der ein oder mehreren Öle beträgt maximal 50 ma-%, bevorzugt 1 bis 45 ma-%, besonders bevorzugt 3 bis 40 ma-% und insbesondere 5 bis 38 ma-%, bezogen auf die Heißschmelzklebstoffformulierungen.

Weiterhin können in den Heißschmelzklebstoffformulierungen anorganische und/oder organische Pigmente, UV-aktive Substanzen, organische und/oder anorganische Nukleierungsmittel, die die Kristallisation der Polymere beschleunigen und damit die offene Zeit ("offene Zeit" = Zeitspanne in der die zu verklebenden Teile miteinander verbunden werden können) der Verklebung reduzieren, enthalten sein.

In einer weiter bevorzugten Form der erfindungsgemäßen Heißschmelzklebstoffformulierungen handelt es sich bei den vorab beschriebenen Formulierungen um Multiphasenblends.

Ein weiterer Gegenstand der vorliegenden Erfindung sind Verklebungen enthaltend ein oder mehrere modifizierte Polyolefine der vorliegenden Erfindung. Insbesondere handelt es sich bei den Verklebungen um Verpackungsverklebungen, Verklebungen von Hygieneartikeln, Holzverklebungen, Verklebungen und/oder Abdichtungen von Glasoberflächen, Etikettverklebungen Laminierungsverklebungen, Teppich- oder Kunstrasenverklebungen, Schuhverklebungen, druckempfindliche Verklebungen, Buchverklebungen oder Textilverklebungen.

Besonders charakteristisch für die vorliegende Erfindung ist, dass bei Verwendung der erfindungsgemäßen modifizierten Polyolefine für Verklebungen auf bzw. von Polyolefinoberflächen und/oder Glasoberflächen auf eine energetische und/oder chemische Vorbehandlung der Polyolefinoberflächen und/oder Glasoberflächen, z. B. durch Beflammung, Plasmabehandlung, Coronabehandlung, Sulfonierung, Ätzung, Primerauftrag usw. verzichtet werden kann, und dennoch eine sehr gute Adhäsion auf diesen Oberflächen erzielt wird.

Im Falle von Verpackungsverklebungen können die Verpackungsmaterialien die Werkstoffe Holz, Pappe, Papier, Kunststoff, Metall, Keramik, Glas, Kunst- und/oder Naturfasern und/oder Textilen umfassen. Bei den Verpackungsmaterialien handelt es sich vorzugsweise um unpolare Kunststoffe, insbesondere um Polyethylen, Polypropylen, Poly(1-buten) oder ihre Copolymere mit linearen und/oder verzweigten C₂₋₂₀ 1-Olefinen, beispielsweise unvernetztes Polyethylen wie z. B. LDPE, LLDPE und/oder HDPE, und/oder um (z. B. silan-)vernetztes Polyolefin, insbesondere um silanvernetzes Polyethylen. Weiterhin kann es sich bei den unpolaren Kunststoffen insbesondere um Polystyrol-, Polybutadien-, Polyisopren- Homo- und/oder Copolymere, und/oder ihre Copolymere mit linearen und/oder verzweigten C₂₋₂₀ 1-Olefinen bzw. Dienen, wie z. B. EPDM, EPM oder EPR, und/oder Synthese- bzw. Naturkautschuk handeln.

Die erfindungsgemäßen modifizierten Polymere zeichnen sich dadurch aus, dass sie (ohne weitere Zusätze) nach einer Lagerdauer von mindestens 14 Tagen im Klimaschrank (20 °C / 65 % relative Luftfeuchte) in einer reinen Polypropylenverklebung (Material: unbehandeltes isotaktisches Polypropylen) eine Klebscherfestigkeit von mindestens 1,25 N/mm², bevorzugt von mindestens 1,5 N/mm², besonders bevorzugt von mindestens 1,75 N/mm² und insbesondere bevorzugt von mindestens 2,0 N/mm² aufweisen. Nach einer Lagerdauer von 42 Tagen werden (ohne weitere Zusätze) Klebscherfestigkeiten auf unbehandeltem Polypropylen von mindestens 1,75 N/mm², bevorzugt mindestens 2,0 N/mm², und insbesondere bevorzugt von mindestens 2,25 N/mm² erreicht.

Im Falle von polaren Kunststoffen handelt es sich insbesondere um Polyacrylate, insbesondere Polyalkylmethacrylate, um Polyvinylacetat, um Polyester und/oder Copolyester, insbesondere um Polyethylentherephthalat und/oder Polybutylenterephthalat, um Polyamide und/oder Copolyamide, um Acrylnitrilcopolymere, insbesondere um Acylnitril/Butadien/Styrol-Copolymere und/oder Styrol/Acrylnitril-Copolymere, um Maleinsäureanhydridcopolymere, insbesondere um S/MSA-Copolymere und/oder MSA-gepfropfte Polyolefine wie z. B. Polypropylen und/oder Polyethylen, um Polyvinylchlorid und/oder um Polycarbonate.
Generell können die Verpackungsmaterialien als Schachtel, Box, Container, Blatt, Scheibe, Film und/oder Folie vorliegen. Beispielsweise können entsprechende Kunststofffolien über Extrusion, Kalander, Blasformen, Gießtechnik, Lösungsziehen, Tiefziehen oder einer Kombination aus mehreren dieser Techniken hergestellt werden. Beispielsweise handelt es sich bei den Kunststofffolien um Einschichtfolien, die orientiert oder nicht orientiert sind. Im Falle einer Orientierung der Einschichtfolie kann eine ein-, zwei- oder multiachsiale Orientierung vorliegen, wobei die Orientierungsachsen in beliebigem Winkel zur Folien-Abzugsrichtung stehen können.
Alternativ kann es sich bei den Kunststofffolien um Mehrschichtfolien handeln, wobei die Folienschichten sowohl aus dem gleichen wie auch aus unterschiedlichem Material gefertigt sein können. Die erfindungsgemäßen modifizierten Polymere eignen sich insbesondere dafür die Haftung auf Polyolefinfolien zu verbessern. Dabei ist sowohl die Verbesserung der Haftung zwischen zwei Polyolefinschichten als auch die Verbesserung der Haftung der obersten Polyolefinschicht (z. B. für eine Beschichtung/Lackierung usw.) durch die erfindungsgemäßen modifizierten Polymere insbesondere möglich. Mehrschichtfolien können orientiert oder nicht orientiert sein. Im Falle einer Orientierung der Mehrschichtkunststofffolien kann eine ein-, zwei- oder multiachsiale Orientierung vorliegen, wobei die Orientierungsachsen in beliebigem Winkel zur Folien-Abzugsrichtung stehen können. In einer besonderen Ausführungsform handelt es sich bei der Mehrschichtkunststofffolie um eine Verbundfolie. Die erfindungsgemäßen modifizierten Polymere eignen sich dabei hervorragend um die Haftung zwischen Polymerfolie und Verbundmaterial herzustellen und/oder zu verbessern. Insbesondere sind hervorragende Haftungseigenschaften bei Polyolefin-Aluminium-, Polyolefin-Glas, Polyolefin-Papier/Pappe-, und Polyolefin/Naturfaser-Verbunden zu realisieren. Bei der Verklebung von Verbundfolien können eine oder mehrere der Folienschichten aus Verbundmaterial bestehen, wobei die Verbundmaterialien in kontinuierlicher Form (z. B. Papier, Aluminiumfolie o. ä.) und/oder diskontinuierlicher Form (z. B. Partikel und/oder Fasern) vorliegen können.
Insbesondere sind bei der Verklebung von Kunststoff-Verpackungsmaterialien gemäß der vorliegenden Erfindung in der Regel keine chemischen und/oder energetischen Vorbehandlungen der Kunststoffoberflächen (z. B. Plasma, Coronabehandlung, Ätzung, Sulfonierung usw.) für die Erzielung einer Haftung notwendig.

Im Falle von Verklebungen von Holz-Verpackungsmaterialien kann es sich bei der Holzverpackung um massives Echtholz, um Echtholzlaminate, um Kunststofflaminate, um MDF-Platten und/oder ähnliche holzartige Stoffe handeln. Dabei können sowohl harz- beziehungsweise ölarme Hölzer wie z. B. Buche, Eiche usw., aber auch harz- beziehungsweise ölreiche Hölzer wie Teak, Kiefer usw. verwendet werden. Insbesondere werden Verklebungen durch die Diffusion von Ölen und/oder Harzen bzw. deren Bestandteilen aus dem Holz an die Klebgrenzschicht zum erfindungsgemäßen Polymer nicht signifikant geschwächt, weisen also auch nach einer langen Lagerdauer noch hohe Klebscherwerte auf. Durch die in den meisten gängigen Holzarten enthaltene natürliche Feuchtigkeit wird (in Abhängigkeit von der Dicke der Klebschicht) eine schnelle und vollständige Vernetzung der Klebschicht erreicht, was zu besonders hohen Klebscherfestigkeiten bei Holzverklebungen unter Verwendung der erfindungsgemäßen Polymere führt.

Bei den Verklebungen von Hygieneartikeln gibt es grundsätzlich keine Einschränkungen, beispielsweise kann es sich hier um Windeln, Binden, Einlagen usw. handeln. Im Regelfall wird durch die erfindungsgemäße Verklebung eine mehrschichtige Struktur aufgebaut, die unterschiedliche Materialien wie z. B. Polymerfolien und Nonwoven umfasst. Darüber hinaus können feuchtigkeitsabsorbierende Substanzen, wie z. B. Polyacrylsäurepartikel (insbesondere unvernetzte oder teilvernetzte), in der Verklebung enthalten sein, die durch die erfindungsgemäßen modifizierten Polyolefine auch reaktiv an die Klebschicht angebunden werden können, insbesondere eignen sich die erfindungsgemäßen modifizierten Polyolefine auch als Matrix- und/oder Untergrundmaterial für Absorberschichten.

Ein weiteres Anwendungsgebiet der erfindungsgemäßen Verklebungen sind strukturelle Holzverklebungen, insbesondere Kantenumleimungen und/oder Dekorpapierummantelungen und/oder Dekorfolienlaminierungen und/oder Montageverklebungen (z. B. im Möbelbau). Dabei sind durch die Vernetzung der erfindungsgemäßen Polymere im Gegensatz zu unmodifizierten Polyolefinen auch solche Verklebungen möglich, die einer hohen Temperaturbelastung widerstehen müssen (z. B. Laminierte Arbeitsflächen im Küchenbereich). Im Falle von Holz-Verklebungen kann es sich bei dem verwendeten Holz um massives Echtholz, um Echtholzlaminate, um Kunststofflaminate, um MDF-Platten und/oder ähnliche holzartige Stoffe handeln. Dabei können sowohl harz- beziehungsweise ölarme Hölzer wie z. B. Buche, Eiche usw., aber auch harz- beziehungsweise ölreiche Hölzer wie Teak, Kiefer usw. verwendet werden. Insbesondere werden Verklebungen durch die Diffusion von Ölen und/oder Harzen bzw. deren Bestandteilen aus dem Holz an die Klebgrenzschicht zum erfindungsgemäßen Polymer nicht signifikant geschwächt, weisen also auch nach einer langen Lagerdauer noch hohe Klebscherwerte auf. Durch die naturgemäß in Holz vorhandene Feuchtigkeit gelingt bei den Verklebungen unter Beteiligung von Holz eine besonders vollständige Vernetzung, was zu äußerst widerstandsfähigen Verklebungen führt.

Die erfindungsgemäßen modifizierten Polymere zeichnen sich dadurch aus, dass sie (ohne weitere Zusätze) in einer reinen Holzverklebung (Holzart: unbehandelte Buche) nach mindestens 14 Tagen Lagerung im Klimaschrank (20 °C / 65 % relative Luftfeuchte) eine Klebscherfestigkeit von mindestens 1,5 N/mm², bevorzugt von mindestens 2,0 N/mm², besonders bevorzugt von mindestens 2,5 N/mm² und insbesondere bevorzugt von mindestens 3,0 N/mm² aufweisen. Nach einer Lagerdauer von 42 Tagen werden (ohne weitere Zusätze) Klebscherfestigkeiten auf unbehandelten Holzprüfkörpern (Buche) von mindestens 2,5 N/mm², bevorzugt mindestens 3,5 N/mm², besonders bevorzugt von mindestens 3,75 N/mm² und insbesondere bevorzugt von mindestens 4 N/mm² erreicht.

Ein weiteres wesentliches Anwendungsgebiet der erfindungsgemäßen Verklebungen sind Verklebungen unter Beteiligung einer Glasoberfläche. Dabei kann die Verklebung feuchtigkeitsabsorbierende Substanzen wie z. B. Kieselgel, Molsieb, Polyacrylsäurepartikel usw. enthalten. Vorzugsweise handelt es sich hierbei um einen Mehrscheibenisolierglasverbund. Hierzu eignen sich alle dem Fachmann bekannten Arten von Mehrscheibenisolierglasverbunden, unabhängig vom einzelnen Aufbau, beispielsweise mit oder ohne weiteren Abstandshalter.
Weiterhin kann bei erfindungsgemäßen Verklebungen unter Beteiligung einer Glasoberfläche eine Laminierung durchgeführt werden.
Darüber hinaus kann es sich bei der Glasoberfläche um die Oberfläche von Glasfasern handeln, beispielsweise die Oberfläche eines Glasfaserkabels, wie es z. B. für Daten- und/oder Telefonleitungen verwendet wird.

Aufgrund ihrer plastischen Verformbarkeit im unvernetzten Zustand lassen sich die erfindungsgemäßen modifizierten Polyolefine besonders gut in bzw. als Dichtungsmassen einsetzten, insbesondere in solchen Dichtungsmassen, die ganz oder teilweise auf eine Glasoberfläche aufgetragen werden.

In einer weiteren Ausführungsform der vorliegenden Erfindung handelt es sich bei dem zu verklebenden Gegenstand um ein Etikett. Das Etikett kann hierbei aus einer Papier-, Kunststoff-, Metall- und/oder Mehrschichtfolie bestehen und insbesondere für die Kennzeichnung von lackierten, beschichteten, eloxierten und/oder auf anderer Weise oberflächenbehandelten Metall- insbesondere Weißblechdosen sowie Glas- oder Kunststoff (insbesondere PET-)-Flaschen verwendet werden. Insbesondere kann es sich bei dem Klebstoff für Etikettenverklebungen um einen sogenannten "druckempfindlichen" Klebstoff (PSA) handeln.

In einer weiteren Ausführungsform der vorliegenden Erfindung handelt es sich bei den Verklebungen um eine Laminierung, wobei es sich bei der zu laminierenden Oberfläche um die Oberfläche einer anorganischen und/oder organischen Substanz handeln kann, vorzugsweise aus Metallen (z. B. Stahl, Aluminium, Messing, Kupfer, Zinn, Zink, Email), aus Glas, aus Keramiken und/oder anorganischen Baustoffen, wie z. B. offen- oder geschlossenporigen Beton. Darüber hinaus kann es sich bei der Oberfläche um Holz, Papier, Pappe und/oder Kunststoffe handeln. Die Oberfläche kann selbst ein Verbundwerkstoff aus anorganischen und organischen Materialien (z. B. Glasfaserverbundwerkstoffe) sein. Dabei kann das gegenkaschierte Laminiermaterial anorganischer und/oder organischer Natur sein. Beispiele gegenkaschierter anorganischer Laminiermaterialien sind ultradünne Glasscheiben, Keramikmembranen und/oder Metallfolien (z. B. Aluminiumfolie). Entsprechende Beispiele gegenkaschierter organischer Laminiermaterialien sind Papier, Pappe, Holzfurnier, Kunststoffe (z. B. als Kunststofffolie), natürliche und/oder synthetische Textilien, Nonwoven, Kunstleder und/oder Naturleder.

Insbesondere handelt es sich bei den erfindungsgemäßen Verklebungen um Verklebungen im Kfz-Innenraum (z. B. Sichtblenden, Dachhimmel, Gepäckraumabdeckung, Innenraumverkleidung usw.).

In einer weiteren besonderen Ausführungsform der vorliegenden Erfindung handelt es sich um Verklebungen zur Herstellung von Teppichen und/oder Kunstrasen. Insbesondere wird die Verklebung zur Noppen- und Filamenteinbindung eingesetzt. Dabei kann es sich bei den einzubindenden Fasern bzw. Faserverbunden um natürliche und/oder synthetische Fasern handeln. Beispiele natürlicher Fasern bzw. Faserverbunde sind Wolle, Baumwolle, Sisal, Jute, Stroh, Hanf, Flachs, Seide und/oder Mischungen aus diesen Fasern.
Beispiele einzubindender synthetischer Fasern bzw. Faserverbunde sind (Co)Polyamidfasern, Polyethylenfasern, (Co)polyesterfasern, Polypropylenfasern und/oder Mischungen aus diesen Fasern. Im Falle von Kunstrasenverklebungen sind die durch die Verklebung eingebundenen Filamente vorzugsweise ausgewählt aus Polypropylenfilamenten, Polyethylenfilamenten, Polyamidfilamenten, Polyesterfilamenten oder Mischfilamenten der aufgeführten Kunststoffe. Insbesondere bevorzugt handelt es sich um Polyethylen- und/oder Polypropylenfilamente. Im Bereich der Kunstrasenverklebung ist insbesondere die gute Haftung der erfindungsgemäßen modifizierten Polyolefine auf unbehandeltem Polyethylen und/oder Polypropylen zusammen mit einer hohen Ausreißfestigkeit der Filamente (auch bei geringen Auftragsgewichten) und einer hohen Flexibilität sowohl der unvernetzten als auch der vernetzten Polymere als besonderer Vorteil zu nennen.

Vorzugsweise wird die Verklebung zur Teppichrückenbeschichtung eingesetzt. Darüber hinaus kann zusätzlich ein textiles Substrat gegenlaminiert werden.
Bei den erhaltenen Teppichelementen handelt es sich beispielsweise um sogenannte Meterware, um Teppichfliesen oder um einen nachträglich verformbaren Autoteppich. In den genannten Anwendungen zur Noppen- und Filamenteinbindung weist das enthaltene erfindungsgemäße modifizierte Polyolefin eine Schmelzviskosität bei 190 °C von maximal 10 000 mPa*s, bevorzugt von maximal 8 000 mPa*s, besonders bevorzugt von 1 000 bis 7 000 mPa*s und insbesondere bevorzugt von 1 250 bis 6 500 mPa*s auf. Das Auftragsgewicht beträgt insbesondere 20 bis 1 500 g/m². Der Auftrag der Schmelzklebermasse erfolgt dabei bevorzugt als Sprüh-, Rakel- und/oder Rollen- bzw. Walzenauftrag. Weitere Beispiele liegen im fachmännischen Können eines Fachmanns.

Weiterhin kann es sich bei den erfindungsgemäßen Verklebungen um Schuhverklebungen handeln, die beispielsweise im Bereich der Sportschuhe und/oder zur Herstellung von sog. Spaltleder eingesetzt werden können.

Ebenfalls erfindungsgemäße Verklebungen sind sogenannte "druckempfindliche Verklebungen" (PSA). Hierbei ist es vorteilhaft wenn mindestens eines der enthaltenen Polymere und/oder Formulierungsbestandteile einen "kalten Fluss" (das heißt keinen Schmelzpunkt oder einen Schmelzpunkt unterhalb der Raumtemperatur) aufweist. Formulierungsbestandteile mit kaltem Fluss sind beispielsweise Poly(1-hexen), Poly(1-octen), Poly(1-hexen-co-1-octen), Polyacrylate usw. Durch die Vernetzung der erfindungsgemäßen modifizierten Polyolefine innerhalb der entsprechenden druckempfindlichen Klebstoffformulierungen, werden besonders elastische Klebverbunde hergestellt.

Im Falle von Buchverklebungen handelt es sich in der Regel um eine Verklebung die beim Vorgang des Buchbindens vorgenommen wird.

Bei Textilverklebungen können mehrere textile Schichten punktuell oder flächig miteinander verbunden werden, wobei zu verklebenden Textilelemente natürliche oder synthetische Materialien umfassen können. Insbesondere handelt es sich bei den natürlichen Textilelementen um Wolle, Rosshaar, Baumwolle, Leinengewebe, Hanf, Jute, Sisal, Flachs, Stroh und/oder Leder. Bevorzugte synthetische Textilelemente enthalten als Bestandteile Polypropylen, Polyethylen, (Co)polyamide, (Co)polyester, Nylon, Perlon und/oder Keflar®. Insbesondere kann es sich bei einem oder mehreren der zu verklebenden Elemente um eine strukturelle Einlage handeln. In einer besonderen Ausführungsform wird die erfindungsgemäße Klebstoffformulierung in Form eines Pulvers zwischen die zu verklebenden textilen Schichten eingebracht und durch thermische Energie (z. B. mit Hilfe einer Bügelpresse) aktiviert.

In einer ebenfalls erfindungsgemäßen Ausführungsform der vorliegenden Erfindung können die erfindungsgemäßen modifizierten Polyolefine in Markierungsmassen, Beschichtungsmassen, Dichtungsbahnen oder Dachbahnen eingesetzt werden.

Die erfindungsgemäßen Markierungsmassen können die bereits bei der Beschreibung der Formmassen bzw. Klebstoffformulierungen genannten weiteren Bestandteile enthalten. Beispielsweise können die erfindungsgemäßen Markierungsmassen als Straßenmarkierungsmassen eingesetzt werden.

Im Falle von Beschichtungsmassen kann es sich beispielsweise um eine Beschichtungsmasse zur Pappe- bzw. Papierbeschichtung handeln sowie um eine Beschichtung eines Pappe bzw. Papier enthaltenden Verbundswerkstoffes, der als weitere Materialkomponenten auch Metallfolien/Metallschichten (z. B. auf Basis von Aluminium) und/oder Kunststofffolien enthalten kann.

Weiterhin eignen sich die erfindungsgemäßen Polymere zur Verwendung in Dichtungsbahnen. Neben den erfindungsgemäßen Polymeren können in den Dichtungsbahnen weitere Bestandteile enthalten sein, insbesondere handelt es sich bei den weiteren Bestandteilen um andere Polymere, Füllstoffe und Bitumen. Im Falle der Dichtungsbahnen liegt der Anteil der erfindungsgemäßen modifizierten Polymere bei maximal 30 ma-%, bevorzugt bei maximal 27 ma-%, besonders bevorzugt bei maximal 25 ma-% und insbesondere bevorzugt bei maximal 22 ma-%, bezogen auf die Dichtungsbahn. Insbesondere handelt es sich bei den Dichtungsbahnen um Dachbahnen.

Weiterhin eignen sich die erfindungsgemäßen modifizierten Polyolefine zur Verwendung als Primer, Haftvermittler bzw. in Primerformulierungen und/oder in Haftvermittlerformulierungen, wobei insbesondere das Fehlen halogenierter organischer Bestandteile von Vorteil ist. Insbesondere werden Primer- und Haftvermittlungsformulierungen, welche die erfindungsgemäßen Polymere enthalten eingesetzt, um eine Haftung von organischen Beschichtungen und/oder Klebstoffen auf unbehandelten Polyolefinoberflächen, insbesondere auf unbehandeltem Polyethylen und/oder Polypropylen sowie auf Glasoberflächen zu erzielen. In einem speziellen Fall werden die Primer- und/oder Haftvermittlerformulierungen als Grundierung auf Polypropylenformteilen wie z. B. Kfz-Stoßfängern und/oder Verkleidungsteilen aufgebracht, um eine bessere Haftung der anschließenden Lackierung zu erzielen.

In den erfindungsgemäßen Primern bzw. Primerformulierungen können neben den erfindungsgemäßen modifizierten Polyolefinen weitere Bestandteile enthalten sein. Insbesondere sind in den bei Raumtemperatur flüssigen Primern/Primerformulierungen cyclische und/oder lineare aliphatische und/oder aromatische Kohlenwasserstoffe mit oder ohne Heteroatome enthalten, auch die Verwendung der entsprechenden halogenierten Kohlenwasserstoffe ist möglich. Vorzugsweise werden aber keine halogenierten Kohlenwasserstoffe verwendet. In den bei Raumtemperatur flüssigen Primern/Primerformulierungen haben die genannten Kohlenwasserstoffe einen Formulierungsanteil von maximal 95 ma-% bevorzugt maximal 93 ma-%, besonders bevorzugt maximal 90 ma-%, und insbesondere bevorzugt von maximal 85 ma-%.

Weiterhin eignen sich die erfindungsgemäßen modifizierten Polyolefine zur Verwendung in Dispersionen, Suspensionen und/oder Emulsionen. In den genannten Dispersionen, Suspensionen und/oder Emulsionen beträgt der Anteil der erfindungsgemäßen Polyolefine bevorzugt mehr als 10 ma-% bezogen auf die Gesamtformulierung.

Der Auftrag des erfindungsgemäßen modifizierten Polyolefins geschieht als Reinsubstanz oder in Form der oben angegebenen Formulierungen (im Falle von Formulierungen, die bei Raumtemperatur fest sind) auf die zu verklebenden Substrate bevorzugt in Form einer Schmelze bei Temperaturen zwischen 50 °C und 300 °C, vorzugsweise zwischen 100 °C und 285 °C, besonders bevorzugt zwischen 130 °C und 260 °C und insbesondere bevorzugt zwischen 140 und 250 °C. Während des Aufheizens bzw. Aufschmelzens empfiehlt sich eine Überlagerung / Beschleierung mit Schutzgas (z. B. Stickstoff, Argon usw.) um die Ausbildung von Gelpartikeln an der Oberfläche zu verhindern. Dazu kann man sich verschiedenster Auftragstechniken wie z. B. Walzen- bzw. Rollenauftrag, Breitschlitzdüse, Rakelauftrag, Punktauftrag, multiline-Auftrag, Rototherm-Auftrag, Sprühauftrag im swirling-Verfahren oder breitflächig mit melt blow- bzw. air assisted spray-Verfahren bedienen. Bei der Verwendung der erfindungsgemäßen modifizierten Polymere im Sprühauftrag ist insbesondere die Verwendung von Schutzgasen (z. B. Stickstoff, Argon usw.) als Sprühmedium bevorzugt. Die Substrate werden anschließend innerhalb der sogenannten "Offenen Zeit", deren Dauer von der Zusammensetzung der aufgetragenen Mischung abhängig ist, zusammengefügt. Wird der aufgetragene Kleber durch vorgeheizte Substrate, Walzen etc. oder Strahlung auf der Auftragstemperatur gehalten, so steht für die Zusammenfügung der Substrate naturgemäß eine längere Zeit zur Verfügung.

Die Vernetzung des Systems erfolgt durch Wasser; dies geschieht je nach Erfordernissen des Anwenders und Eigenschaften der Substrate mittels Wasserdampf aus der Umgebungsluft, durch Dampf- bzw. Heißwasserbehandlung oder durch Wasser, welches in den Formulierungsbestandteilen und/oder Substraten enthalten ist.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.
Nachfolgend wird die vorliegende Erfindung anhand von Beispielen näher erläutert. Alternative Ausführungsformen der vorliegenden Erfindung sind in analoger Weise erhältlich.

### Analytik:

### a) Hochtemperatur-¹³C-NMR

Die Polymerzusammensetzung, die (Co)monomertaktizität sowie die Anzahl der Monomerblöcke werden über Hochtemperatur-¹³C-NMR bestimmt. Die ¹³C-NMR-Spektroskopie von Polymeren ist beispielsweise in folgenden Publikationen beschrieben:
[1] S. Berger, S. Braun, H.-O. Kalinowski, 13C-NMR-Spektroskopie, Georg Thieme Verlag Stuttgart 1985
[2] A.E. Tonelli, NMR Spectroscopy and Polymer Microstructure, Verlag Chemie Weinheim 1989
[3] J.L. Koenig, Spectroscopy of Polymers, ACS Professional Reference Books, Washington 1992
[4] J.C. Randall, Polymer Sequence Determination, Academic Press, New York 1977
[5] A. Zambelli et al: Macomolecules, 8, 687 (1975)
[6] A. Filho, G.Galland: J.Appl.Polym.Sci., 80, 1880 (2001)

### b) Rheologie

Die Rheologischen Messungen erfolgen gemäß ASTM D 4440-01 ("Standard Test Method for Plastics: Dynamic Mechanical Properties Melt Rheology") unter Verwendung eines Rheometers MCR 501 der Firma Anton Paar mit einer Platte-Platte-Geometrie (Plattendurchmesser: 50 mm) als Oszillationsmessung. Als maximale Probendeformation wird in allen Messungen 1 % verwendet, die temperaturabhängigen Messungen werden bei einer Messfrequenz von 1 Hz und einer Abkühlgeschwindigkeit von 1,5 K/min durchgeführt.
Die maximale Deformation der Probe wird so gewählt, dass sich die Probe während der gesamten Messdauer im linear viskoelastischen Bereich befindet. Die erfindungsgemäßen Polymere zeichnen sich somit u. a. dadurch aus, dass ihre Schmelzen ein viskoelastisches Verhalten zeigen. Viskoelastische Materialien zeichnen sich gegenüber Hookschen Festkörpern durch die Fähigkeit aus, aus einer Deformation resultierende Spannungen über eine bestimmte Zeit dissipativ abzubauen (Relaxation). Im Gegensatz zu Newtonschen Flüssigkeiten, die unter Einwirkung einer Scherung/Dehnung einer ausschließlich irreversiblen Verformung unterliegen, können viskoelastische Fluide einen Teil der Deformationsenergie zurückgewinnen, nachdem die Scherkraft entfernt wurde (sog. "Memory Effekt") *[*N.P.Cheremisinoff; "An Introduction to Polymer Rheology and Processing"; CRC Press; London; 1993]. Ein weiteres Kennzeichen der Schmelzen der erfindungsgemäßen Polymere ist das Auftreten einer sogenannten Strukturviskosität. Als solche bezeichnet man ein Verhalten, bei dem die Schubspannung als auftretende Kraft die Ausgangsstruktur des Materials in Abhängigkeit von der Schergeschwindigkeit abbaut. Da dieser Abbauprozess eine Mindestschergeschwindigkeit voraussetzt, fließt das Material unterhalb dieser Schergeschwindigkeit wie eine Newtonsche Flüssigkeit. Eine Erklärung liefert das Prinzip von Le Chatelier, wobei das "Ausweichen" der strukturviskosen Flüssigkeit (vor der mechanischen Beanspruchung) in der Ausrichtung entlang der Schubflächen zur Verminderung des Reibungswiderstandes besteht. Letzteres führt zum Abbau der Gleichgewichtsstruktur des Anfangszustandes und zum Aufbau einer schuborientierten Struktur, was wiederum ein erleichtertes Fließen (Viskositätsverminderung) zur Folge hat. In Polymerschmelzen ist der Newtonsche Bereich nur bei sehr kleinen Schergeschwindigkeiten bzw. kleinen Scheramplituden wahrnehmbar. Seine Bestimmung ist über rheometrische Testmethoden (Amplituden-"Sweeps", d.h. Messung bei fester Frequenz in Abhängigkeit von der Scheramplitude) möglich und notwendig, wenn die Messung im reversiblen, d.h. reproduzierbaren Bereich durchgeführt werden soll [R.S.Lenk; "Rheologie der Kunststoffe"; C.Hanser Verlag; München; 1971*;* J.Meissner; "Rheologisches Verhalten von KunststoffSchmelzen und -Lösungen" in: "Praktische Rheologie der Kunststoffe"; VDI-Verlag; Düsseldorf; 1978*;* J.-F. Jansson; Proc.8th.Int.Congr.Rheol.; 1980; Vol.3]. Die Schwingungsrheometrie ist auf Grund ihrer geringen Krafteinwirkung, ihrer geringen Deformation und der somit geringen Auswirkung auf die Probenmorphologie besonders gut zur Untersuchung von Materialien geeignet, die ein strukturviskoses Verhalten zeigen. Die Vermessung der modifizierten Polymere erfolgt im vorliegenden Fall stets ohne weitere Zusätze im unvernetzten Zustand, wobei sinnvoller Weise während der Messung eine Beschleierung mit trockenem Schutz- bzw. Inertgas (z.B. Stickstoff, Argon usw.) erfolgt. Durch die Vernetzung der erfindungsgemäßen modifizierten Polyolefine kommt es (pro Molekül gesehen) zu einem Molmassenaufbau, was eine Erhöhung der Schmelzviskosität zur Folge hat. Das Ausmaß der Erhöhung richtet sich dabei u.a. nach dem verwendeten Monomer, der Dicke des Prüfkörpers, der Konzentration an Vernetzungsbeschleuniger und dem Pfropfgrad (d.h. der Menge an aufgepfropften feuchtigkeitsvernetzenden Gruppen). Vollständig vernetzte erfindungsgemäß modifizierte Polymere mit hohem Pfropfgrad schmelzen nur noch bei sehr hohen Temperaturen oder aber gar nicht, und weisen ein gewisses Maß an Gummielastizität auf (d.h. das Speichermodul liegt in einem sehr weiten Temperaturbereich erheblich über dem Verlustmodul).

### c) Nadelpenetration (PEN)

Die Nadelpenetration wird gemäß DIN EN 1426 bestimmt. Die Vermessung der modifizierten Polymere erfolgt im vorliegenden Fall stets ohne weitere Zusätze im unvernetzten Zustand, wobei sinnvoller Weise während der Messung eine Beschleierung mit trockenem Schutz- bzw. Inertgas (z.B. Stickstoff, Argon usw.) erfolgt. Durch die Vernetzung der erfindungsgemäßen Polyolefine kommt es zu einer Verknüpfung zwischen den Polymermolekülen die eine Änderung der Materialeigenschaften wie z.B. auch der Nadelpenetration bewirkt. Das Ausmaß der Erhöhung richtet sich dabei u.a. nach dem verwendeten Monomer, der Konzentration an Vernetzungsbeschleuniger und dem Pfropfgrad (d.h. der Menge an aufgepfropften feuchtigkeitsvernetzenden Gruppen). Dabei sinkt die Nadelpenetration in der Regel mit zunehmendem Vernetzungsfortschritt.

### d) DSC

Die Bestimmung der Schmelzenthalpie, der Glasübergangstemperatur und des Schmelzbereichs des kristallinen Anteils erfolgt über Differentialkalorimetrie (DSC) gemäß DIN 53 765 aus der 2. Aufheizkurve bei einer Heizrate von 10 K/min. Der Wendepunkt der Wärmestromkurve wird als Glasübergangstemperatur ausgewertet. Die Vermessung der modifizierten Polymere erfolgt im vorliegenden Fall stets ohne weitere Zusätze im unvernetzten Zustand, wobei sinnvoller Weise während der Messung eine Beschleierung mit trockenem Schutz- bzw. Inertgas (z.B. Stickstoff, Argon usw.) erfolgt. Durch die Vernetzung der erfindungsgemäßen Polyolefine kommt es zu einer Verknüpfung zwischen den Polymermolekülen die eine Änderung der Materialeigenschaften wie z.B. auch der Glasübergangstemperatur, des/der Schmelzpunkte(s) und der Schmelzenthalpie. Das Ausmaß der Veränderung richtet sich dabei u.a. nach dem verwendeten Monomer, der Probendicke, der Konzentration an Vernetzungsbeschleuniger und dem Pfropfgrad (d.h. der Menge an aufgepfropften feuchtigkeitsvernetzenden Gruppen). Im Allgemeinen ist bei den erfindungsgemäßen modifizierten Polyolefinen von einer mit zunehmender Vernetzung ansteigenden Glasübergangstemperatur, einem ansteigenden Schmelzpunkt und einer abnehmenden Schmelzenthalpie auszugehen. Vollständig vernetzte erfindungsgemäß modifizierte Polymere mit hohem Pfropfgrad schmelzen nur noch bei sehr hohen Temperaturen oder aber gar nicht, und weisen im Vergleich mit unvernetzten modifizierten wie unmodifizierten erfindungsgemäßen Polyolefinen nur einen sehr schwach ausgeprägten -oder aber keinen- Glasübergang und nur noch eine sehr viel geringere -oder aber keine- Schmelzenthalpie auf.

### e) Zugfestigkeit und Reißdehnung

Die Bestimmung der Zugfestigkeit und Reißdehnung erfolgt nach DIN EN ISO 527-3. Durch die Vernetzung der erfindungsgemäßen Polyolefine kommt es zu einer Verknüpfung zwischen den Polymermolekülen die eine Änderung der Materialeigenschaften wie z.B. auch der Zugfestigkeit und der Reißdehnung bewirkt. Das Ausmaß der Veränderung richtet sich dabei u.a. nach dem verwendeten Monomer, der Probendicke, der Konzentration an Vernetzungsbeschleuniger und dem Pfropfgrad (d.h. der Menge an aufgepfropften feuchtigkeitsvernetzenden Gruppen). In der Regel kommt es bei den erfindungsgemäßen modifizierten Polyolefinen mit zunehmender Vernetzung zu einem Anstieg der Zugfestigkeit. Die Reißdehnung kann, je nach verwendetem Pfropfmonomer und den verwendeten Reaktionsbedingungen prinzipiell sowohl mit zunehmender Vernetzung ansteigen wie auch abfallen.

### f) Erweichungspunkt (Ring&Kugel)

Die Bestimmung des Erweichungspunktes nach der Ring- und Kugelmethode erfolgt nach DIN EN 1427. Die Vermessung der modifizierten Polymere erfolgt im vorliegenden Fall stets ohne weitere Zusätze im unvernetzten Zustand, wobei sinnvoller Weise während der Messung eine Beschleierung mit trockenem Schutz- bzw. Inertgas (z.B. Stickstoff, Argon usw.) erfolgt. Durch die Vernetzung der erfindungsgemäßen Polyolefine kommt es zu einer Verknüpfung zwischen den Polymermolekülen die eine Änderung der Materialeigenschaften wie z.B. auch der Erweichungstemperatur bewirken. Das Ausmaß der Veränderung richtet sich dabei u.a. nach dem/den verwendeten Pfropfmonomer(en), der Probendicke, der Konzentration an Vernetzungsbeschleuniger und dem Pfropfgrad (d.h. der Menge an aufgepfropften feuchtigkeitsvernetzenden Gruppen). In der Regel kommt es bei den erfindungsgemäßen modifizierten Polyolefinen mit zunehmender Vernetzung zu einem Anstieg des Erweichungspunktes. Vollständig vernetzte erfindungsgemäß modifizierte Polymere mit hohem Pfropfgrad erweichen nur noch bei sehr hohen Temperaturen oder aber gar nicht (definitionsgemäß).

### g) Klebscherfestigkeit

Die Bestimmung der Klebscherfestigkeit erfolgt nach DIN EN 1465. Alle verwendeten Prüfkörper werden vor der Probenpräparation gereinigt und entstaubt. Alle Kunststoffprüfkörper werden zusätzlich vor der Probenpräparation mit einem geeigneten Reinigungsmittel entfettet. Die Lagerung aller gereinigten, entstaubten und entfetteten Prüfkörper vor der Verwendung erfolgt im Klimaschrank bei 20 °C und 20% rel. Luftfeuchte. Dadurch wird ein gleichmäßiger Wassergehalt z.B. bei Holzprüfkörpern erreicht. Durch eine erhöhte Feuchtigkeit bedingte singuläre Effekte z.B. bei hydrophilen bzw. hydrolyseempfindlichen Polymeren werden so ausgeschlossen bzw. minimiert. Durch die Vernetzung der erfindungsgemäßen Polyolefine kommt es zu einer Verknüpfung zwischen den Polymermolekülen die eine Änderung der Materialeigenschaften wie z.B. auch der Klebscherfestigkeit bewirken kann. Dies gilt vor allem für den Fall, dass im unvernetzten Zustand bei der Prüfung der Klebscherfestigkeit ein Kohäsionsbruch (Materialversagen innerhalb der Klebschicht) festgestellt wurde. Das Ausmaß der Veränderung richtet sich dabei u.a. nach dem/den verwendeten Pfropfmonomer(en), der Dicke der Klebschicht, der Konzentration an Vernetzungsbeschleuniger und dem Pfropfgrad (d.h. der Menge an aufgepfropften feuchtigkeitsvernetzenden Gruppen). In der Regel kommt es bei den erfindungsgemäßen modifizierten Polyolefinen mit zunehmender Vernetzung zu einem Anstieg der Klebscherfestigkeit, da einerseits eine reaktive Anbindung an die Probenoberfläche (verbesserte Adhäsion) und andererseits ein Molmassenaufbau (verbesserte Kohäsion) stattfindet.

### h) RFA-Spektroskopie

Die in Alu - Schalen gegossenen und ausgehärteten Proben werden mit einem Stanzeisen (Durchmesser 30 mm) ausgestanzt. Die Bestimmung erfolgt als Doppelbestimmung. Die Schichtdicke der Polymerproben beträgt > 5 mm. Die Proben werden im Probenhalter platziert und vermessen (Messgerät: PANalytical PW 2404). Die quantitative Bestimmung erfolgt gegen eine externe Kalibrierung von Si in Borax-Tabletten.

### i) Xylollöslichkeit

Es wird ein Xylol-Isomerengemisch verwendet, wobei das Polymer unter Rückfluss gelöst und dann die Lösung auf Raumtemperatur abgekühlt wird. 2 g Polyolefin werden in 250 mL Xylol unter Rühren und Heizen bis zum Siedepunkt von Xylol gelöst. Nachdem 20 min unter Rückfluss gekocht wurde, lässt man die Polymerlösung auf 25 °C abkühlen. Ungelöstes bzw. ausgefallenes Polyolefin wird abfiltriert (15 cm-Nutsche, Sartorius 390-Filterpapier) und getrocknet. Die überbleibende Polymerlösung wird in einem 5-fachen Überschuss an Methanol (mit einem Tropfen 37-prozentiger wässriger HCl versetzt) ausgefällt. Der entstehende Niederschlag wird abfiltriert und bei 80 °C im Trockenschrank (Vakuum) getrocknet. Die Vermessung der modifizierten Polymere erfolgt im vorliegenden Fall sinnvoller Weise ohne weitere Zusätze im unvernetzten Zustand, wobei ebenfalls sinnvoller Weise die Lagerung der für die Lösungsversuche verwendeten modifizierten Polymere unter trockenem Schutz-/Inertgas erfolgt. Durch die Vernetzung der erfindungsgemäßen Polyolefine kommt es zu einer Verknüpfung zwischen den Polymermolekülen die eine Änderung der Materialeigenschaften wie z.B. auch der Löslichkeit bewirken. Das Ausmaß der Veränderung richtet sich dabei u.a. nach dem/den verwendeten Pfropfmonomer(en), der Dicke der für die Lösungsversuche verwendeten Polymerpartikel, der Konzentration an Vernetzungsbeschleuniger und dem Pfropfgrad (d.h. der Menge an aufgepfropften feuchtigkeitsvernetzenden Gruppen). In der Regel kommt es bei den erfindungsgemäßen modifizierten Polyolefinen mit zunehmender Vernetzung zu einem starken Abfall der Löslichkeit. Bei vollständig vernetzten erfindungsgemäßen modifizierten Polymeren mit hohem Pfropfgrad wird in der Regel weniger eine Löslichkeit als vielmehr ein gewisses Quellvermögen beobachtet.

### j) Löslichkeit in THF

Die Löslichkeit in THF ist ein Kennzeichen teilkristalliner Polyolefine. Die Durchführung erfolgt analog zu den Lösungsversuchen in Xylol. Bezüglich des Einflusses der Vernetzung gilt das beim Xylol gesagte zumindest graduell auch für THF.

Die beschriebenen Messmethoden beziehen sich dabei auf jede Vermessung im Rahmen der vorliegenden Erfindung, unabhängig davon ob es sich um das zu pfropfende Basispolymer oder um das erfindungsgemäße Polyolefin handelt.

### Beispiele:

### Erfindungsgemäße Basispolymere und nicht erfindungsgemäße Vergleichsbeispiele

Die Herstellung der Basispolymere (erfindungsgemäße Bsp. Nr. 3 - 6) erfolgt unter Verwendung eines Mischkontaktes aus einem kristallinen Titantrichlorid in Form eines mit Aluminium reduzierten TiCl₄ (TiCl₃ * 0,33 AlCl₃) und Aluminiumtriisobutyl (im Gewichtsverhältnis 1:4). Die in Tabelle 1 angegebenen Monomere werden im Lösungsmittel n-Butan bei 70°C in einem Laborautoklaven polymerisiert, wobei je nach Zielmolmasse unterschiedliche Mengen an Wasserstoff als Molmassenregler eingesetzt werden. Es treten Drücke von 10 bis 36 bar auf. Die Monomere Ethen und Propen werden während der Reaktionszeit von 3h kontinuierlich zudosiert, das Monomer 1-Buten wird zusammen mit dem verwendeten Lösungsmittel vorgelegt. Nach 3h wird die Reaktionsmischung mit Isopropanol versetzt, wodurch die Reaktion abgestoppt wird. In einem Verdampfer werden nicht umgesetzte Monomere sowie das Lösungsmittel n-Butan verdampft. Das Polymer wird aufgeschmolzen und bei einer Temperatur von 190 °C abgefüllt.

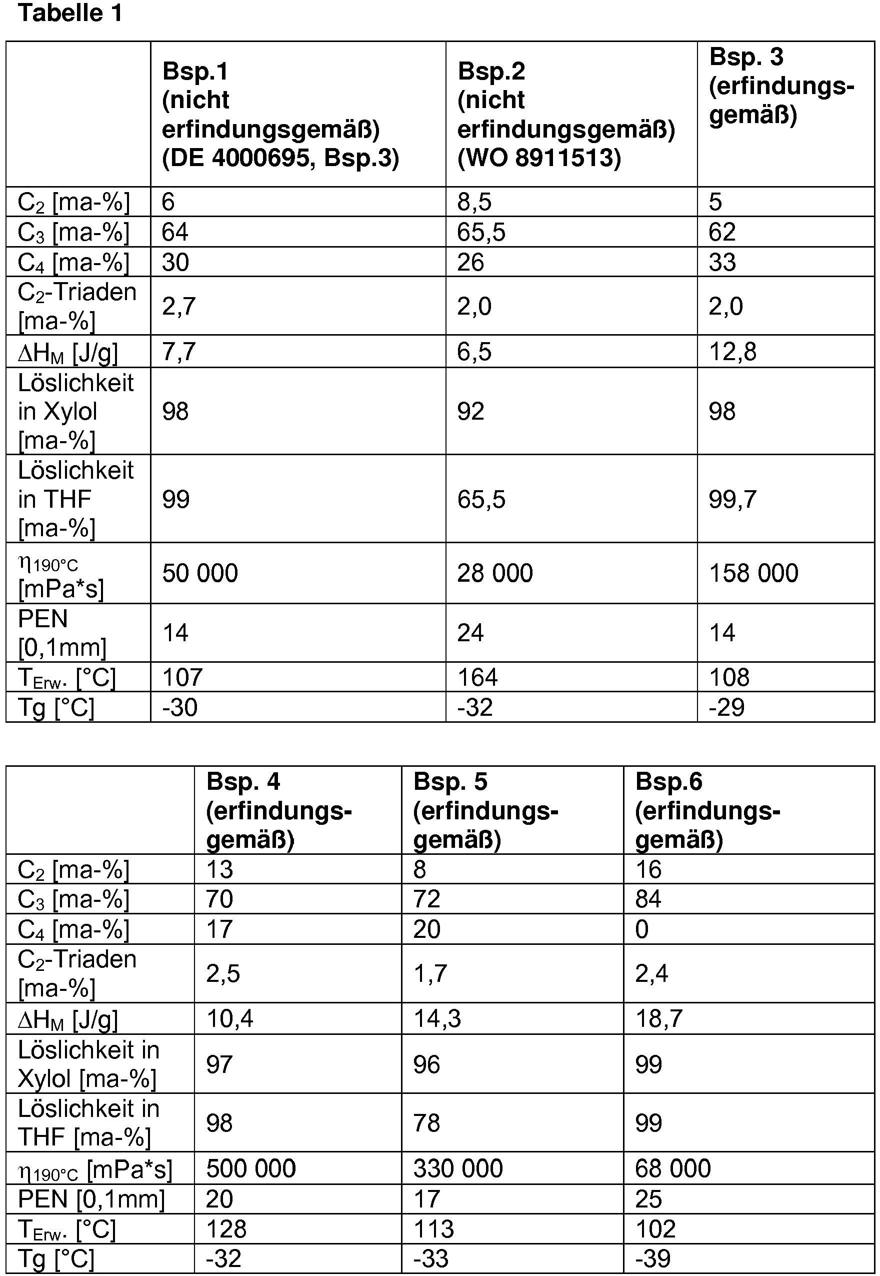

### 2. Erfindungsgemäße modifizierte Polymere:

Herstellung der erfindungsgemäßen modifizierten Polyolefine in der Schmelze:
Ein teilkristallines Polyolefin (Zusammensetzung und Materialparameter siehe Tabelle 1) wird in einem Doppelschneckenextruder (Berstorff ZE40) mit dem Monomer Vinyltrimethoxysilan und dem Initiator Dicumylperoxid (Menge siehe Tabelle 2) bei einer bestimmten Reaktionstemperatur (siehe Tabelle 2) für ca. 90 Sekunden (VWZ) vermischt. Das überschüssige Monomer wird in der letzten Zone des Extruders bei einem Vakuum von ca. 20 mbar verdampft. Anschließend erfolgt eine Stabilisierung durch ca. 0,3 ma-% IRGANOX 1076.

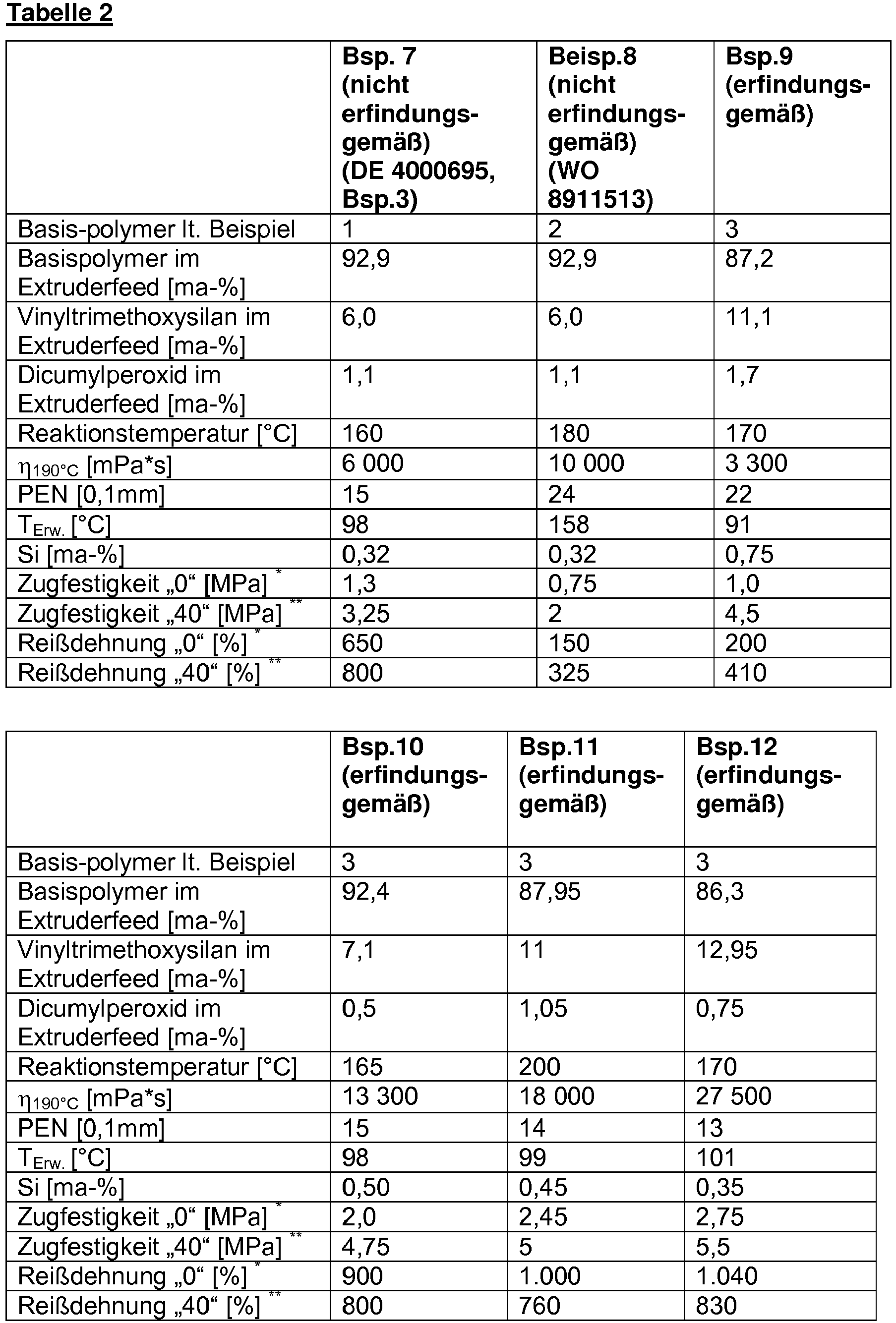

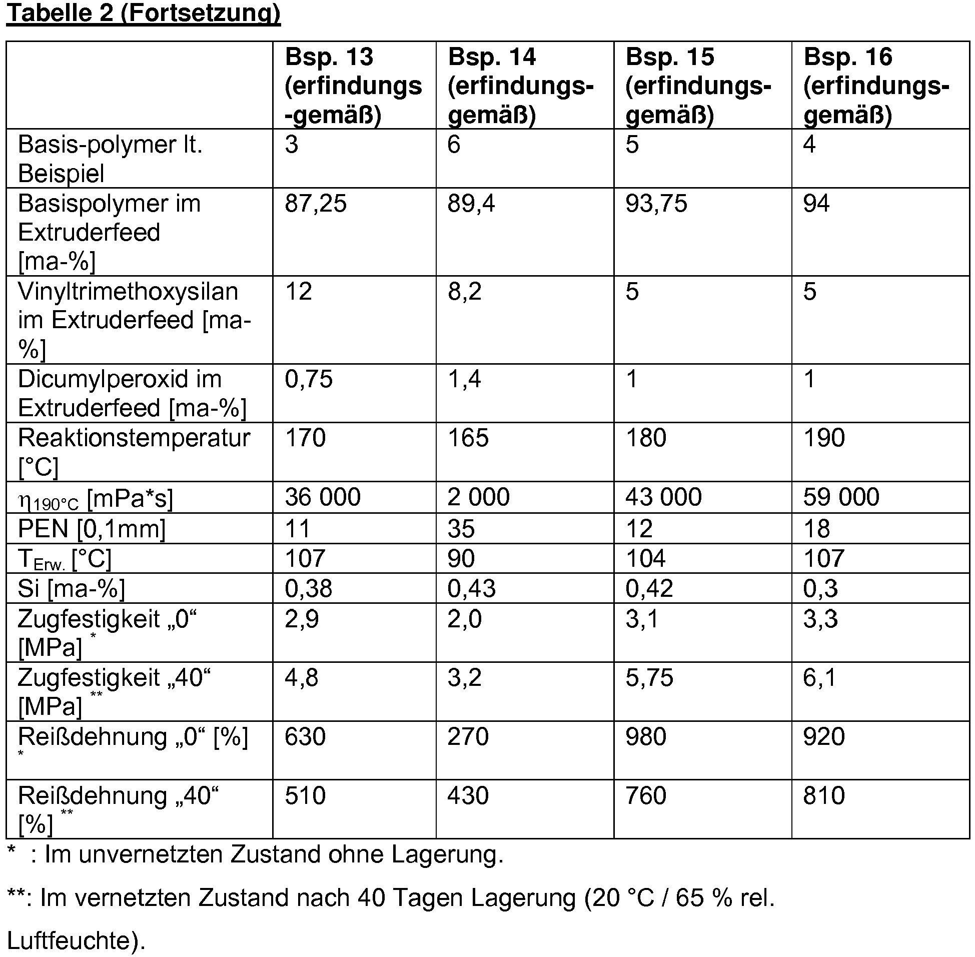

### 3. Herstellung der erfindungsgemäßen modifizierten Polyolefine in Lösung

150 g eines teilkristallines Polyolefin (Zusammensetzung und Materialparameter siehe Tabelle 1) werden in einem Laborreaktor in 750 g eines Lösungsmittels (Art siehe Tabelle 3) gelöst, und auf eine bestimmte Reaktionstemperatur (Tabelle 3) gebracht. Anschließend werden 1,85 g eines Initiators sowie 18,75 g eines Monomers (Art siehe Tabelle 3) für eine Reaktionszeit von 120 Minuten kontinuierlich zudosiert. Im Anschluss an die Zudosierung folgt eine 30-minütige Nachreaktionsphase. Lösungsmittel und Restmonomere werden über einen Verdampfer abgetrennt.

**Tabelle 3**

| | **Bsp. 17** | **Bsp. 18** | **Bsp. 19** | **Bsp.20** |
|---|---|---|---|---|
| Basispolymer It. Bsp. | 3 | 3 | 4 | 6 |
| Lösungsmittel | Xylol | Xylol | Toluol | Tetrahydrofuran |
| Monomer | Vinyltriethoxysilan | Vinyltrimethoxysilan | 3-Trimethoxy-silylpropyl-methacrylat | Vinyltris(2-methoxy-ethoxy)silan |
| Initiator | Dicumylperoxid | Dicumylperoxid | Dicumylperoxid | Azobisisobutyronitril |
| | | | | |
| Reaktionstemp. [°C] | 130 | 130 | 130 | 85 |
| Bemerkung | -- | -- | -- | Druckfahrweise |
| η_{190°C} [mPa*s] | 41 000 | 18 000 | 56 000 | 49 000 |
| PEN [0,1mm] | 15 | 17 | 11 | 14 |
| T_{Erw.} [°C] | 104 | 98 | 126 | 107 |
| Si [ma-%] | 0,29 | 0,32 | 0,8 | 0,3 |
| Zugfestigkeit "0" [MPa] * | 2,35 | 2,30 | 2,35 | 2,35 |
| Zugfestigkeit "40" [MPa] ** | 3,05 | 2,95 | 3,80 | 3,75 |
| Reißdehnung "0" [%] * | 940 | 720 | 680 | 750 |
| Reißdehnung "40" [%] ** | 900 | 860 | 940 | 800 |

| | | | | |
|---|---|---|---|---|
| * : Im unvernetzten Zustand ohne Lagerung. **: Im vernetzten Zustand nach 40 Tagen Lagerung (20°C / 65% rel. Luftfeuchte). | | | | |

### 4. Verklebungen ohne weitere Zusätze

### a) Holzverklebungen

Die erfindungsgemäß modifizierten Polyolefine werden bei 190 °C im Trockenschrank unter Schutzgasatmosphäre (z. B. Stickstoff, Argon usw.) eine Stunde aufgeschmolzen und anschließend bei einer Temperatur von 170 °C (mit Hilfe eines Thermofühlers) auf einen Holzprüfkörper (Holzart: Buche massiv) appliziert. Dieser wird innerhalb von 20 Sekunden mit einem weiteren Holzprüfkörper (Holzart: Buche massiv) auf einer Fläche von 4 cm² einfach überlappend zusammengefügt und 5 Minuten mit einem Gewicht von 2 Kg aneinandergepresst. Überstehendes Klebpolymer wird entfernt. Anschließend lagert das Verklebungsmuster eine bestimmte Anzahl von Tagen bei 20 °C / 65 % rel. Luftfeuchte im Klimaschrank und wird anschließend mittels Zugprüfung auf seine mechanischen Eigenschaften hin getestet.

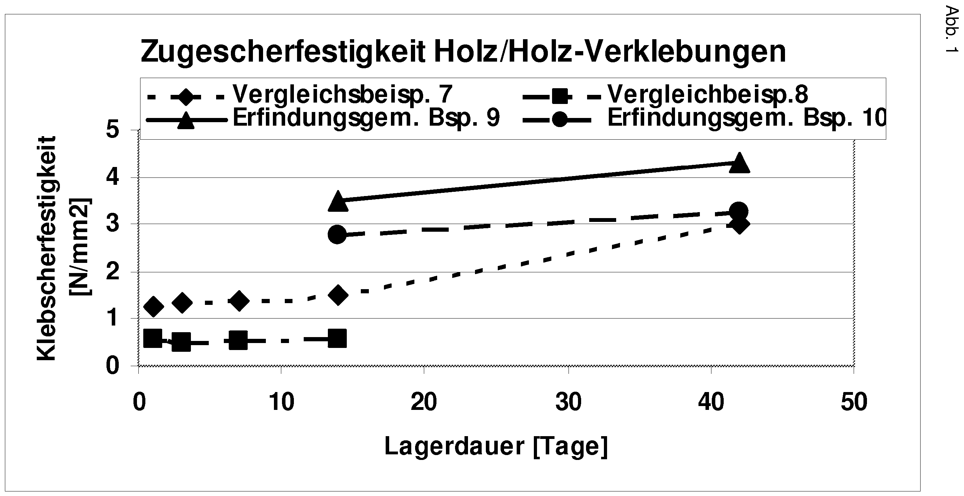

Abb. 1 zeigt die Ergebnisse bezüglich der Zugscherfestigkeiten der erfindungsgemäßen Systeme im Vergleich zum Stand der Technik. Im Vergleich mit den nicht erfindungsgemäßen Beispielen 7 und 8 werden schon nach deutlich kürzeren Lager- bzw. Vernetzungszeiten deutlich höhere (bis zu + 700 %) Klebscherwerte erreicht, was auf die deutlich bessere Anbindung an die Holzoberfläche und die höhere Vernetzungsdichte innerhalb der Klebschicht zurückgeführt werden kann.

### b) Polypropylenverklebungen:

Die erfindungsgemäß modifizierten Polyolefine werden bei 190 °C im Trockenschrank unter Schutzgasatmosphäre (z. B. Stickstoff, Argon usw.) eine Stunde aufgeschmolzen und anschließend bei einer Temperatur von 170 °C (mit Hilfe eines Thermofühlers) auf einen Polypropylenprüfkörper (isotaktisches Polypropylen, "PP-DWST"/ Hersteller: Simona AG) appliziert. Dieser wird innerhalb von 20 Sekunden mit einem weiteren Polypropylenprüfkörper (isotaktisches Polypropylen, "PP-DWST"/ Hersteller: Simona AG) auf einer Fläche von 4 cm² einfach überlappend zusammengefügt und 5 Minuten mit einem Gewicht von 2 Kg aneinandergepresst. Überstehendes Klebpolymer wird entfernt. Anschließend lagert das Verklebungsmuster eine bestimmte Anzahl von Tagen bei 20 °C / 65 % rel. Luftfeuchte im Klimaschrank und wird anschließend mittels Zugprüfung auf seine mechanischen Eigenschaften hin getestet.

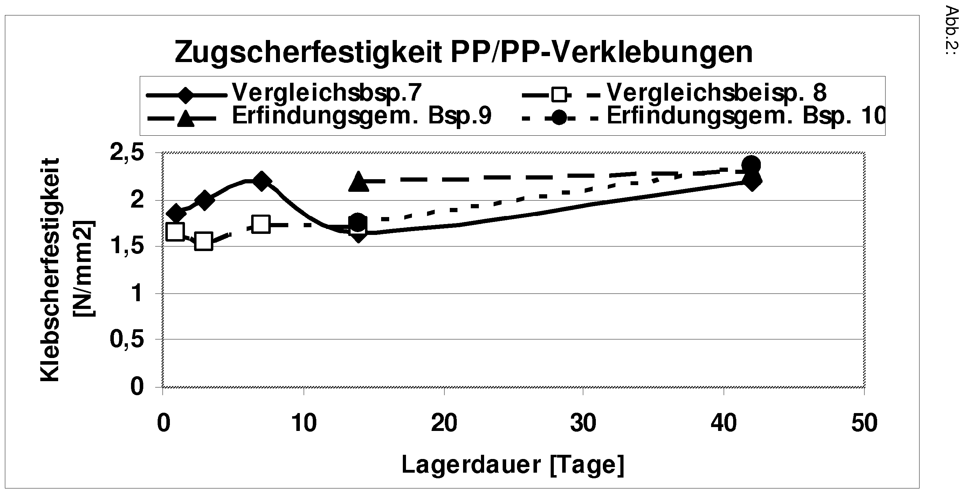

Abb. 2 zeigt die Ergebnisse bezüglich der Zugscherfestigkeiten der erfindungsgemäßen Systeme im Vergleich zum Stand der Technik.

### 5. Verklebungen mit Vernetzungskatalysatoren

### a) Verklebungen/Beschichtungen von PMMA:

Je 100 g der erfindungsgemäß modifizierten Polyolefine werden im Trockenschrank bei 180 °C unter Schutzgasatmosphäre (z. B. Stickstoff, Argon usw.) für 1 Stunde aufgeschmolzen. Die Dose mit der heißen Schmelze wird anschließend auf einer Heizplatte mit einem IKA-Rührer mit Kneter gerührt. Bei 170°C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polymethylmethacrylatprüfkörper (Formmasse "7N", Evonik Röhm GmbH) appliziert. Dieser wird innerhalb von 20 Sekunden mit einem weiteren Polymethylmethacrylatprüfkörper (Formmasse "7N", Evonik Röhm GmbH) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.
Bei einer **Verklebungstemperatur von 170 °C** werden folgende Ergebnisse erzielt:
Erfindungsgemäß modifiziertes Polyolefin nach Beispiel 9: 0,55 N/mm²
Erfindungsgemäß modifiziertes Polyolefin nach Beispiel 10: 0,80 N/mm²
Der Klebfilm lässt sich nach der Prüfung rückstandsfrei von der PMMA-Oberfläche abziehen.

Bei einer **Verklebungstemperatur von 240 °C** werden folgende Ergebnisse erzielt:
Erfindungsgemäß modifiziertes Polyolefin nach Beispiel 9: 0,70 N/mm²
Erfindungsgemäß modifiziertes Polyolefin nach Beispiel 10: 1,1 N/mm²
Der Klebfilm lässt sich nach der Prüfung rückstandsfrei von der PMMA-Oberfläche abziehen.

Durch eine Erhöhung der Verklebungstemperatur lässt sich bei Verwendung der erfindungsgemäßen modifizierten Polyolefine somit eine deutliche Erhöhung (bis zu + 40 %) der Klebscherfestigkeit erzielen, ohne dass dabei die PMMA-Oberfläche angegriffen wird.

### b) Verklebungen von harz-/ölhaltigen Hölzern

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Holzprüfkörperprüfkörper (Holzarten: Kiefer bzw. Teak) appliziert. Dieser wird innerhalb von 20 Sekunden mit einem weiteren Holzprüfkörper jeweils gleicher Holzart (d. h. Kiefer oder Teak) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 bzw. 28 Tage bei 20 °C / 65 % rel. Luftfeuchte im Klimaschrank und wird anschließend mittels Zugprüfung auf seine mechanischen Eigenschaften hin getestet (siehe Tabelle).

| Erfindungsgemäßes modfiziertes Polyolefin nach Beispiel: | Holzart | Klebscher-Festigkeit nach 2 Wochen Lagerdauer [N/mm²] | Klebscher-Festigkeit nach 4 Wochen Lagerdauer [N/mm²] |
|---|---|---|---|
| VESTOPLAST 750¹ (nicht erfindungsgemäß) | Kiefer | 0,65 | 0,65 |
| VESTOPLAST 750¹ (nicht erfindungsgemäß) | Teak | 0,70 | 0,52 |
| Bsp.7 (nicht erfindungsgemäß) | Teak | 2,50 | 1,86 |
| Bsp. 9 erfindungsgemäß | Kiefer | 3,70 | 4,9 |
| Bsp. 9 erfindungsgemäß | Teak | 3,10 | 3,0 |
| Bsp. 10 erfindungsgemäß | Kiefer | 3,61 | 3,75 |
| Bsp. 10 erfindungsgemäß | Teak | 2,95 | 2,90 |

| | | | |
|---|---|---|---|
| ¹ Fa. Evonik Degussa GmbH | | | |

### c) Verklebungen von Polyvinylchlorid

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polyvinylchloridprüfkörper (Kömadur, Hersteller: Profine GmbH Kömmerling Kunststoffe) appliziert. Dieser wird innerhalb von 20 Sekunden mit einem weiteren Polyvinylchloridprüfkörper (Kömadur, Hersteller: Profine GmbH Kömmerling Kunststoffe) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.
Bei der Verwendung von nichtmodifiziertem VESTOPLAST 750 (nicht erfindungsgemäß, Fa. Evonik Degussa GmbH) wird eine Klebscherfestigkeit von 0,62 N/mm² gemessen.
Bei der Verwendung von modifiziertem Polyolefin gemäß Beispiel 9 (erfindungsgemäß) wird eine Klebscherfestigkeit von 1,14 N/mm² gemessen. Bei der Verwendung von modifiziertem Polyolefin gemäß Beispiel 10 (erfindungsgemäß) wird eine Klebscherfestigkeit von 1,34 N/mm² gemessen.

### d) Verklebungen von Polyethylen

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polyethylenprüfkörper ("PE-HWST", Hersteller: Simona AG) appliziert. Dieser wird innerhalb von 20 Sekunden mit einem weiteren Polyethylenprüfkörper ("PE-HWST", Hersteller: Simona AG) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.
Bei der Verwendung von nichtmodifiziertem VESTOPLAST 750 (nicht erfindungsgemäß, Fa. Evonik Degussa GmbH) wird eine Klebscherfestigkeit von 0,69 N/mm² gemessen.
Bei der Verwendung von modifiziertem Polyolefin gemäß Beispiel 9 (erfindungsgemäß) wird eine Klebscherfestigkeit von 0,83 N/mm² gemessen. Bei der Verwendung von modifiziertem Polyolefin gemäß Beispiel 10 (erfindungsgemäß) wird eine Klebscherfestigkeit von 1,20 N/mm² gemessen.

### e) Verklebungen von Poly(ethylenterephthalat)

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polyethylenterephthalatprüfkörper ("Axpet clear 099", Hersteller: Bayer Polymers) appliziert. Dieser wird innerhalb von 20 Sekunden mit einem weiteren Polyethylenterephthalatprüfkörper ("Axpet clear 099", Hersteller: Bayer Polymers) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet. Bei der Verwendung von nichtmodifiziertem VESTOPLAST 750 (nicht erfindungsgemäß, Fa. Evonik Degussa GmbH) wird eine Klebscherfestigkeit von 0,4 N/mm² gemessen. Bei der Verwendung von modifiziertem Polyolefin gemäß Beispiel 9 (erfindungsgemäß) wird eine Klebscherfestigkeit von 1,23 N/mm² gemessen. Bei der Verwendung von modifiziertem Polyolefin gemäß Beispiel 10 (erfindungsgemäß) wird eine Klebscherfestigkeit von 1,54 N/mm² gemessen.

### f) Verklebungen von Polycarbonat

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polycarbonatprüfkörper ("Makrolon mono", Hersteller: Bayer Polymers) appliziert. Dieser wird innerhalb von 20 Sekunden mit einem weiteren Polycarbonatprüfkörper ("Makrolon mono", Hersteller: Bayer Polymers) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet. Bei der Verwendung von nichtmodifiziertem VESTOPLAST 750 (nicht erfindungsgemäß, Fa. Evonik Degussa GmbH) wird eine Klebscherfestigkeit von 0,21 N/mm² gemessen. Bei der Verwendung von modifiziertem Polyolefin gemäß Beispiel 9 (erfindungsgemäß) wird eine Klebscherfestigkeit von 0,68 N/mm² gemessen. Bei der Verwendung von modifiziertem Polyolefin gemäß Beispiel 10 (erfindungsgemäß) wird eine Klebscherfestigkeit von 1,15 N/mm² gemessen.

### g) Verklebungen von Polyamid-6

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polyamid-6-prüfkörper ("Sustamid 6", Hersteller: Cadillac Plastic) appliziert. Dieser wird innerhalb von 20 Sekunden mit einem weiteren Polyamid-6-prüfkörper ("Sustamid 6", Hersteller: Cadillac Plastic) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet. Bei der Verwendung von nichtmodifiziertem VESTOPLAST 750 (nicht erfindungsgemäß, Fa. Evonik Degussa GmbH,) wird eine Klebscherfestigkeit von 0,62 N/mm² gemessen. Bei der Verwendung von modifiziertem Polyolefin gemäß Beispiel 9 (erfindungsgemäß) wird eine Klebscherfestigkeit von 1,29 N/mm² gemessen. Bei der Verwendung von modifiziertem Polyolefin gemäß Beispiel 10 (erfindungsgemäß) wird eine Klebscherfestigkeit von 2,04 N/mm² gemessen.

### h) Verklebungen von hochschlagfestem Polystyrol

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Polystyrolprüfkörper ("METZO®Plast SB/HK", Hersteller: Metzeler Plastics GmbH) appliziert. Dieser wird innerhalb von 20 Sekunden mit einem weiteren Polystyrolprüfkörper ("METZO®Plast SB/HK", Hersteller: Metzeler Plastics GmbH) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet. Bei der Verwendung von nichtmodifiziertem VESTOPLAST 750 (nicht erfindungsgemäß, Fa. Evonik Degussa GmbH) wird eine Klebscherfestigkeit von 0,31 N/mm² gemessen. Bei der Verwendung von modifiziertem Polyolefin gemäß Beispiel 9 (erfindungsgemäß) wird eine Klebscherfestigkeit von 0,82 N/mm² gemessen. Bei der Verwendung von modifiziertem Polyolefin gemäß Beispiel 10 (erfindungsgemäß) wird eine Klebscherfestigkeit von 1,62 N/mm² gemessen.

### k) Verklebungen von ABS

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen ABS-Prüfkörper ("METZO®PLAST ABS/G", Hersteller: Metzeler Plastics GmbH) appliziert. Dieser wird innerhalb von 20 Sekunden mit einem weiteren ABS-Prüfkörper ("METZO®PLAST ABS/G", Hersteller: Metzeler Plastics GmbH) auf einer Fläche von 4 cm² einfach überlappend zusammengefügt und 5 Minuten mit einem Gewicht von 2 Kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet. Bei der Verwendung von nichtmodifiziertem VESTOPLAST 750 (nicht erfindungsgemäß, Fa. Evonik Degussa GmbH) wird eine Klebscherfestigkeit von 0,23 N/mm² gemessen.
Bei der Verwendung von modifiziertem Polyolefin gemäß Beispiel 9 (erfindungsgemäß) wird eine Klebscherfestigkeit von 1,19 N/mm² gemessen. Bei der Verwendung von modifiziertem Polyolefin gemäß Beispiel 10 (erfindungsgemäß) wird eine Klebscherfestigkeit von 2,0 N/mm² gemessen.

### I) Verklebungen von Stahl

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Stahl-Prüfkörper (Edelstahl 1.4301, Abmaße: 100mm x 20mm x 1,5mm) appliziert. Dieser wird innerhalb von 20 Sekunden mit einem weiteren Stahl-Prüfkörper (Edelstahl 1.4301, Abmaße: 100mm x 20mm x 1,5mm) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.
Bei der Verwendung von nichtmodifiziertem VESTOPLAST 750 (nicht erfindungsgemäß, Fa. Evonik Degussa GmbH) wird eine Klebscherfestigkeit von 0,36 N/mm² gemessen.
Bei der Verwendung von modifiziertem Polyolefin gemäß Beispiel 9 (erfindungsgemäß) wird eine Klebscherfestigkeit von 0,41 N/mm² gemessen. Bei der Verwendung von modifiziertem Polyolefin gemäß Beispiel 10 (erfindungsgemäß) wird eine Klebscherfestigkeit von 0,66 N/mm² gemessen.

### m) Verklebungen von Aluminium

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Aluminium-Prüfkörper (99.5, Abmaße: 100 mm x 20 mm x 1,5 mm) appliziert. Dieser wird innerhalb von 20 Sekunden mit einem weiteren Aluminium-Prüfkörper (99.5, Abmaße: 100 mm x 20 mm x 1,5 mm) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.
Bei der Verwendung von nichtmodifiziertem VESTOPLAST 750 (nicht erfindungsgemäß, Fa. Evonik Degussa GmbH) wird eine Klebscherfestigkeit von 0,26 N/mm² gemessen.
Bei der Verwendung von modifiziertem Polyolefin gemäß Beispiel 9 (erfindungsgemäß) wird eine Klebscherfestigkeit von 0,3 N/mm² gemessen. Bei der Verwendung von modifiziertem Polyolefin gemäß Beispiel 10 (erfindungsgemäß) wird eine Klebscherfestigkeit von 0,36 N/mm² gemessen.

### n) Verklebungen von Kupfer

Je 100 g der erfindungsgemäß modifizierten Polyolefine werden im Trockenschrank bei 180 °C unter Schutzgasatmosphäre (z. B. Stickstoff, Argon usw.) für eine Stunde aufgeschmolzen. Die Dose mit der heißen Schmelze wird anschließend auf einer Heizplatte mit einem IKA-Rührer mit Kneter gerührt. Bei 170 °C werden 5 g DBTL-Masterbatch (bestehend aus 98 ma-% VESTOPLAST® 708, Fa. Evonik Degussa GmbH, und 2 ma-% Dibutylzinndilaurat) zugegeben und 15 min homogenisiert. Anschließend wird die Polymerschmelze bei einer bestimmten Verklebungstemperatur (mit Hilfe eines Thermofühlers) auf einen Kupfer-Prüfkörper (SF-CUF24, Abmaße: 100 mm x 20 mm x 1,5 mm) appliziert. Dieser wird innerhalb von 20 Sekunden mit einem weiteren Kupfer-Prüfkörper (SF-CUF24, Abmaße: 100 mm x 20 mm x 1,5 mm) auf einer Fläche von 4 cm² einfach überlappend zusammengefügt und 5 Minuten mit einem Gewicht von 2 kg aneinander gepresst. Überstehendes Klebpolymer wird entfernt. Anschließend lagert das Verklebungsmuster für 14 Tage bei 20 °C / 65 % rel. Luftfeuchte im Klimaschrank und wird anschließend mittels Zugprüfung auf seine mechanischen Eigenschaften hin getestet.
Bei der Verwendung von nichtmodifiziertem VESTOPLAST 750 (nicht erfindungsgemäß, Fa. Evonik Degussa GmbH) wird eine Klebscherfestigkeit von 0,27 N/mm² gemessen.
Bei der Verwendung von modifiziertem Polyolefin gemäß Beispiel 9 (erfindungsgemäß) wird eine Klebscherfestigkeit von 0,30 N/mm² gemessen. Bei der Verwendung von modifiziertem Polyolefin gemäß Beispiel 10 (erfindungsgemäß) wird eine Klebscherfestigkeit von 0,36 N/mm² gemessen.

### 6. Beispielformulierungen für Klebstoffe/Dichtungsmassen mit erfindungsgemäßen Polymeren.

### Vorgehensweise:

Nach Aufschmelzen des erfindungsgemäßen modifizierten Polyolefins bei 190 °C im Trockenschrank unter Schutzgasatmosphäre (z. B. Stickstoff, Argon usw.) für eine Stunde werden die Formulierungsbestandteile zugegeben, ggf. aufgeschmolzen und dann mit einem geeigneten Mischapparat (z. B. auf einer Heizplatte mit einem IKA-Rührer mit Kneter) homogen vermischt:

### Unverstärkte Formmasse

74,8 Gewichtsanteile erfindungsgemäßes modifiziertes Polyolefin nach Bsp. 15
5 Gewichtsanteile DBTL-Masterbatch (98 ma-% VESTOPLAST® 708, Fa. Evonik Degussa GmbH, 2 ma-% Dibutylzinndilaurat)
20 Gewichtsanteile isotaktisches Polypropylen (z. B. SABIC PP 520 P. Fa. Sabic)
0,2 Gewichtsanteile IRGANOX 1076 (Octadecyl-3,5-di-(tertbutyl)-4-hydroxy-hydrocinnamat, Fa. Ciba)

### Faserverstärkte Formmasse

59,8 Gewichtsanteile erfindungsgemäßes modifiziertes Polyolefin nach Bsp. 16
5 Gewichtsanteile Glasfasern (z. B. Owen Corning CS429YZ)
5 Gewichtsanteile DBTL-Masterbatch (98 ma-% VESTOPLAST® 708, Fa. Evonik Degussa GmbH, 2 ma-% Dibutylzinndilaurat)
30 Gewichtsanteile isotaktisches Polypropylen (z. B. SABIC PP 520 P, Fa. Sabic)
0,2 Gewichtsanteile IRGANOX 1076 (Octadecyl-3,5-di-(tertbutyl)-4-hydroxy-hydrocinnamat, Fa. Ciba)

Die Glasfasern werden vor der Verwendung bei 550°C im Ofen für eine Stunde pyrolytisch entschlichtet.

### Schutzmasse (Kfz-Unterbodenschutz)

40 Gewichtsanteile erfindungsgemäß modifiziertes Polyolefin nach Bsp. 9 39,3 Gewichtsanteile teilkristallines Polyolefin (z. B. VESTOPLAST 708, Fa. Evonik Degussa GmbH)
5 Gewichtsanteile DBTL-Masterbatch (98 ma-% VESTOPLAST® 708, Fa. Evonik Degussa GmbH, 2 ma-% Dibutylzinndilaurat)
10 Gewichtsanteile niederviskoses Polybutadienöl (z. B. Polyöl 110)
5 Gewichtsanteile Glasfasern (z. B. Owen Corning CS429YZ)
0,5 Gewichtsanteile Carbon Black (z. B. Printex 60)
0,2 Gewichtsanteile IRGANOX 1076 (Octadecyl-3,5-di-(tertbutyl)-4-hydroxy-hydrocinnamat, Fa. Ciba)

### Dichtungsmasse Isolierglas

46,3 Gewichtsanteile erfindungsgemäß modifiziertes Polyolefin nach Bsp. 10 5 Gewichtsanteile DBTL-Masterbatch (98 ma-% VESTOPLAST® 708, Fa. Evonik Degussa GmbH, 2 ma-% Dibutylzinndilaurat)

20 Gewichtsanteile Butylrubber
20 Gewichtsanteile Zeolith, 3A
5 Gewichtsanteile teilkristallines Polyolefin (z. B. VESTOPLAST® 750, Fa. Evonik Degussa GmbH)
3 Gewichtsanteile Carbon Black (z. B. Printex 60)
0,5 Gewichtsanteile Organisches Silan (z. B. Dynasilan GLYMO, Fa. Evonik Degussa GmbH)
0,2 Gewichtsanteile IRGANOX 1076 (Octadecyl-3,5-di-(tertbutyl)-4-hydroxy-hydrocinnamat. Fa. Ciba)

### Schmelzkleber für KfZ-Innenraum

72,8 Gewichtsanteile erfindungsgemäß modifiziertes Polyolefin nach Bsp. 9 5 Gewichtsanteile DBTL-Masterbatch (98 ma-% VESTOPLAST® 708, Fa. Evonik Degussa GmbH, 2 ma-% Dibutylzinndilaurat)
15 Gewichtsanteile Kohlenwasserstoffharz (z. B.: ESCOREZ 5300, Fa. ExxonMobil Chemical)
2 Gewichtsanteile Rosinester (z. B. FORAL 105)
5 Gewichtsanteile Poly(ethylen-co-vinylacetat) (z. B. ESCORENE MV02514) 0,2 Gewichtsanteile IRGANOX 1076 (Octadecyl-3,5-di-(tertbutyl)-4-hydroxy-hydrocinnamat, Fa. Ciba)

### Schmelzkleber für Schuhverklebungen

49,8 Gewichtsanteile erfindungsgemäß modifiziertes Polyolefin nach Bsp. 14
5 Gewichtsanteile DBTL-Masterbatch (98 ma-% VESTOPLAST® 708, Fa. Evonik Degussa GmbH, 2 ma-% Dibutylzinndilaurat)
20 Gewichtsanteile teilkristallines Polyolefin (z. B. VESTOPLAST® 408, Fa. Evonik Degussa GmbH)
15 Gewichtsanteile Kohlenwasserstoffharz (z. B.: ESCOREZ 5300, Fa. ExxonMobil Chemical)
5 Gewichtsanteile Poly(ethylen-co-vinylacetat) (z. B. ESCORENE UL15028) 2 Gewichtsanteile Polyethylenwachs (z. B. VESTOWAX® A227, Fa. Evonik Degussa GmbH)
3 Gewichtsanteile Calcit
0,2 Gewichtsanteile IRGANOX 1076 (Octadecyl-3,5-di-(tertbutyl)-4-hydroxy-hydrocinnamat, Fa. Ciba)

### Schmelzkleber für Buchverklebungen

45,7 Gewichtsanteile VESTOPLAST 408®, Fa. Evonik Degussa GmbH
30 Gewichtsanteile erfindungsgemäß modifiziertes Polyolefin nach Bsp. 11 5 Gewichtsanteile DBTL-Masterbatch (98 ma-% VESTOPLAST® 708, Fa. Evonik Degussa GmbH, 2 ma-% Dibutylzinndilaurat)
10 Gewichtsanteile gesättigtes Kohlenwasserstoffharz (z. B. ARKON P90) 7 Gewichtsanteile Polyolefinwachs (z. B. LICOWAX PP230)
2 Gewichtsanteile MSA-gepfropftes Polypropylenwachs (z. B. LICOMONT TPAR504)
0,3 Gewichtsanteile IRGANOX 1076 (Octadecyl-3,5-di-(tertbutyl)-4-hydroxy-hydrocinnamat, Fa. Ciba)

### Schmelzkleber für Verpackungen (Material: Polypropylen)

44,7 Gewichtsanteile teilkristallines Polyolefin (z. B. VESTOPLAST 828®, Fa. Evonik Degussa GmbH)
40 Gewichtsanteile erfindungsgemäß modifiziertes Polyolefin nach Bsp. 12 5 Gewichtsanteile DBTL-Masterbatch (98 ma-% VESTOPLAST® 708, Fa. Evonik Degussa GmbH, 2 ma-% Dibutylzinndilaurat)
10 Gewichtsanteile Kohlenwasserstoffharz (z. B.: ESCOREZ 1102, Fa. ExxonMonil Chemical)
0,3 Gewichtsanteile IRGANOX 1076 (Octadecyl-3,5-di-(tertbutyl)-4-hydroxy-hydrocinnamat, Fa. Ciba)

### Universal-Schmelzkleber mit breitem Anwendungsprofil

84,7 Gewichtsanteile erfindungsgemäß modifiziertes Polyolefin nach Bsp. 9 5 Gewichtsanteile DBTL-Masterbatch (98 ma-% VESTOPLAST® 708, Fa. Evonik Degussa GmbH,, 2 ma-% Dibutylzinndilaurat)
2 Gewichtsanteile MSA-gepfropftes Polypropylencopolymer (z. B. EXXELOR PO1015)
3 Gewichtsanteile Polyolefinwachs (z. B. VESTOWAX A616, Fa. Evonik Degussa GmbH,)
5 Gewichtsanteile Kohlenwasserstoffharz (z. B.: ESCOREZ 1102, Fa. ExxonMobil Chemical)
0,3 Gewichtsanteile IRGANOX 1076 (Octadecyl-3,5-di-(tertbutyl)-4-hydroxy-hydrocinnamat, Fa. Ciba)

### Schmelzklebstoff für Kantenumleimungen

24,7 Gewichtsanteile erfindungsgemäß modifiziertes Polyolefin nach Bsp. 16
5 Gewichtsanteile DBTL-Masterbatch (98 ma-% VESTOPLAST® 708, Fa. Evonik Degussa GmbH, 2 ma-% Dibutylzinndilaurat)
15 Gewichtsanteile teilkristallines Polyolefin VESTOPLAST 891®, Fa. Evonik Degussa GmbH
10 Gewichtsanteile teilkristallines Polyolefin VESTOPLAST 792®, Fa. Evonik Degussa GmbH
3 Gewichtsanteile isotaktisches Polypropylen (z. B. SABIC PP 579S, Fa. Sabic)
2 Gewichtsanteile MSA-gepfropftes Polypropylenwachs (z. B. LICOMONT TPAR504)
12 Gewichtsanteile hydriertes aliphatisches Kohlenwasserstoffharz (z. B. EASTOTAC H-130)
4 Gewichtsanteile aromatisches Kohlenwasserstoffharz (z. B. NOVARES TN150)
12 Gewichtsanteile Poly(ethylen-co-vinylacetat)-Copolymer (z. B. ELVAX210) 12 Gewichtsanteile Calcit
0,3 Gewichtsanteile IRGANOX 1076 (Octadecyl-3,5-di-(tertbutyl)-4-hydroxy-hydrocinnamat, Fa. Ciba)

### Primer für Polypropylen/Polyethylen (Rezeptur 1)

80 Gewichtsanteile Xylol
20 Gewichtsanteile erfindungsgemäß modifiziertes Polyolefin nach Bsp. 9

## Patentansprüche

1. Modifiziertes Polyolefin ausgewählt aus Poly(ethylen-co-propylen-co-1-buten) mit einem durch ¹³C-NMR-Spektroskopie bestimmten Gehalt an Propylen zwischen 50 und 75 ma-% und einem durch ¹³C-NMR-Spektroskopie bestimmten Gehalt an Poly(ethylen)-Triaden von maximal 2,5 ma-%, bezogen auf den insgesamt detektierten Ethylenanteil, wobei das Polyolefin eine mittels Differentialkalorimetrie bestimmte Schmelzenthalpie von mindestens 9 und maximal 20 J/g, eine Löslichkeit in Xylol bei Raumtemperatur von mindestes 96 ma-%, und eine Löslichkeit in Tetrahydrofuran bei Raumtemperatur von mindestens 67 ma-% aufweist, wobei auf das Polyolefin ein oder mehrere Silane aufgepfropft sind.

2. Polyolefin gemäß Anspruch 1, **dadurch gekennzeichnet, dass** die durch DSC bestimmte Glasübergangstemperatur des unmodifizierten (ungepfropften) Polyolefins beim maximal -20 °C liegt.

3. Polyolefin gemäß Anspruch 1 oder 2, **dadurch gekennzeichnet, dass** die ein oder mehreren Silane ausgewählt sind aus der Gruppe umfassend Vinyltrimethoxysilan, Vinyltriethoxysilan, Vinyl-tris(2-methoxy-ethoxy-)silan, 3-Methacryloxypropyltrimethoxysilan, 3-Methacryloxypropyltriethoxysilan, Vinyldimethylethoxysilan und/oder Vinylmethyldibutoxysilan.

4. Polyolefin gemäß einem oder mehreren der Ansprüche 1 bis 3, **dadurch gekennzeichnet, dass** der durch Röntgenfluoreszenzspektroskopie bestimmte Siliziumgehalt bei mindestens 0,3 ma-% liegt.

5. Verfahren zur Herstellung eines modifizierten Polyolefins gemäß Anspruch 1, **dadurch gekennzeichnet, dass** ein Polyolefin ausgewählt aus Poly(ethylen-co-propylen-co-1-buten) mit einem durch ¹³C-NMR-Spektroskopie bestimmten Gehalt an Propylen von mindestens 50 ma-% und maximal 75 ma-% und mit einem durch ¹³C-NMR-Spektroskopie bestimmten Gehalt an Poly(ethylen)Triaden von maximal 2,5 ma-%, bezogen auf den insgesamt detektierten Etyhlenanteil und einer mittels Differentialkalorimetrie bestimmten Schmelzenthalpie von 9 bis 20 J/g, das eine Löslichkeit in Xylol bei Raumtemperatur von mindestes 96 ma-%, und eine Löslichkeit in Tetrahydrofuran bei Raumtemperatur von mindestens 60 ma-% aufweist, mit mindestens einem Radikalstarter und einem oder mehreren Silanen in Kontakt gebracht wird, woraufhin eine Pfropfreaktion der ein oder mehreren Silane auf das Polyolefin stattfindet.

6. Verwendung von modifizierten Polyolefinen gemäß einem oder mehreren der Ansprüche 1 bis 3 als oder in Formmassen, in Schutzmassen, als oder in Klebstoffen, in Dichtungsmassen, in Markierungsmassen, Beschichtungsmassen, Dichtungsbahnen oder Dachbahnen, als Primer oder in Primerformulierungen und/oder Haftvermittlerformulierungen und/oder in Dispersionen, Suspensionen oder Emulsionen.

7. Formmassen, Schutzmassen, Klebstoffe, Dichtungsmassen, Markierungsmassen, Beschichtungsmassen, Dichtungsbahnen oder Dachbahnen, Primer, Primerformulierungen, Haftvermittlerformulierungen, Dispersionen, Suspensionen und/oder Emulsionen enthaltend ein oder mehrere modifizierte Polyolefine gemäß einem oder mehreren der Ansprüche 1 bis 3.

8. Klebstoffe gemäß Anspruch 7, **dadurch gekennzeichnet, dass** es sich um Heißschmelzklebstoffformulierungen handelt.

9. Verklebungen enthaltend ein oder mehrere modifizierte Polyolefine gemäß einem oder mehreren der Ansprüche 1 bis 3.

10. Verklebungen gemäß Anspruch 9, **dadurch gekennzeichnet, dass** es sich bei den Verklebungen um Verpackungsverklebungen, Verklebungen von Hygieneartikeln, Holzverklebungen, Verklebungen von Glasoberflächen, Etikettverklebungen, Laminierungsverklebungen, Teppich- oder Kunstrasenverklebungen, Schuhverklebungen, druckempfindliche Verklebungen, Buchverklebungen oder Textilverklebungen handelt.

11. Teppichverklebung für die Noppen- und Filamenteinbindung gemäß Anspruch 10, **dadurch gekennzeichnet, dass** ein Auftragsgewicht von 20 bis 1500 g/m² verwendet wird.

12. Kunstrasenverklebung gemäß Anspruch 10, **dadurch gekennzeichnet, dass** die durch die Verklebung eingebundenen Filamente ausgewählt sind aus Polypropylenfilamenten, Polyethylenfilamenten, Polyamidfilamenten, Polyesterfilamenten oder Mischfilamenten der aufgeführten Kunststoffe.

13. Primer- und/oder Haftvermittlerformulierung nach Anspruch 7, enthaltend ein oder mehrerer Polyolefine gemäß einem oder mehreren der Ansprüche 1 bis 3 **dadurch gekennzeichnet, dass** sie zur Behandlung einer Polyolefinoberfläche eingesetzt wird.

## Claims

1. Modified polyolefin chosen from poly(ethylene-co-propylene-co-1-butene) having a content of propylene, determined by ¹³C-NMR spectroscopy, of between 50 and 75 wt.% and a content of poly(ethylene) triads, determined by ¹³C-NMR spectroscopy, of a maximum of 2.5 wt.%, based on the total ethylene content detected, the polyolefin having a melt enthalpy, determined by means of differential scanning calorimetry, of at least 9 and a maximum of 20 J/g, a solubility in xylene at room temperature of at least 96 wt.% and a solubility in tetrahydrofuran at room temperature of at least 67 wt.%, one or more silanes being grafted on to the polyolefin.

2. Polyolefin according to Claim 1, **characterized in that** the glass transition temperature of the non-modified (non-grafted) polyolefin, determined by DSC, is a maximum of -20°C.

3. Polyolefin according to Claim 1 or 2, **characterized in that** the one or more silanes are chosen from the group including vinyltrimethoxysilane, vinyltriethoxysilane, vinyl-tris(2-methoxy-ethoxy)silane, 3-methacryloxypropyltrimethoxysilane, 3-methacryloxypropyltriethoxysilane, vinyldimethylethoxysilane and/or vinylmethyldibutoxysilane.

4. Polyolefin according to one or more of Claims 1 to 3, **characterized in that** the silicon content, determined by x-ray fluorescence spectroscopy, is at least 0.3 wt.%.

5. Process for the preparation of a modified polyolefin according to Claim 1, **characterized in that** a polyolefin chosen from poly(ethylene-co-propylene-co-1-butene) having a content of propylene, determined by ¹³C-NMR spectroscopy, of at least 50 wt.% and a maximum of 75 wt.% and a content of poly(ethylene) triads, determined by 13C-NMR spectroscopy, of a maximum of 2.5 wt.%, based on the total etyhlene content detected, and a melt enthalpy, determined by means of differential scanning calorimetry, of 9 to 20 J/g, which has a solubility in xylene at room temperature of at least 96 wt.% and a solubility in tetrahydrofuran at room temperature of at least 60 wt.%, is brought into contact with at least one free radical initiator and one or more silanes, after which a grafting reaction of the one or more silanes on to the polyolefin takes place.

6. Use of modified polyolefins according to one or more of Claims 1 to 3 as or in molding compositions, in protective compositions, as or in adhesives, in sealing compositions, in marking compositions, coating compositions, sealing sheets or roofing felts, as primers or in primer formulations and/or adhesion promoter formulations and/or in dispersions, suspensions or emulsions.

7. Molding composition, protective composition, adhesive, sealing composition, marking composition, coating composition, sealing sheet or roofing felt, primer, primer formulation, adhesion promoter formulation, dispersion, suspension and/or emulsion comprising one or more modified polyolefins according to one or more of Claims 1 to 3.

8. Adhesive according to Claim 7, **characterized in that** it is a hot melt adhesive formulation.

9. Bond comprising one or more modified polyolefins according to one or more of Claims 1 to 3.

10. Bond according to Claim 9, **characterized in that** the bond is a packaging bond, bond on hygiene articles, wood bond, bond on glass surfaces, label bond, laminating bond, carpet or artificial lawn bond, shoe bond, pressure-sensitive bond, book bond or textile bond.

11. Carpet bond for binding in tufts and filaments according to Claim 10, **characterized in that** an application weight of from 20 to 1,500 g/m2 is used.

12. Artificial lawn bond according to Claim 10, **characterized in that** the filaments bound in by the bond are chosen from polypropylene filaments, polyethylene filaments, polyamide filaments, polyester filaments or mixed filaments of the plastics listed.

13. Primer and/or adhesion promoter formulation according to Claim 7, comprising one or more polyolefins according to one or more of Claims 1 to 3, **characterized in that** it is employed for treatment of a polyolefin surface.

## Revendications

1. Polyoléfine modifiée choisie parmi le poly(éthylène-co-propylène-co-1-butène) ayant une teneur en propylène, déterminée par spectroscopie RMN du ¹³C, comprise entre 50 et 75 % en masse et une teneur en triades de poly(éthylène), déterminée par spectroscopie RMN du ¹³C d'au plus 2,5 % en masse, par rapport à la proportion d'éthylène détectée au total, la polyoléfine présentant une enthalpie de fusion déterminée par calorimétrie différentielle d'au moins 9 et d'au plus 20 J/g, une solubilité dans le xylène à température ambiante d'au moins 96 % en masse et une solubilité dans la tétrahydrofurane à température ambiante d'au moins 60 % en masse, un ou plusieurs silanes étant greffés sur la polyoléfine.

2. Polyoléfine selon la revendication 1, **caractérisée en ce que** la température de transition vitreuse déterminée par DSC de la polyoléfine non modifiée (non greffée) est d'au plus -20 °C.

3. Polyoléfine selon la revendication 1 ou 2, **caractérisée en ce que** le ou les silanes sont choisis dans le groupe comprenant le vinyltriméthoxysilane, le vinyltriéthoxysilane, le vinyl-tris(2-méthoxy-éthoxy)silane, le 3-méthacryloxypropyltriméthoxysilane, le 3-méthacryloxypropyltriéthoxysilane, le vinydiméthyléthoxysilane et/ou le vinylméthyldibutoxysilane.

4. Polyoléfine selon une ou plusieurs des revendications 1 à 3, **caractérisée en ce que** la teneur en silicium déterminée par spectroscopie de fluorescence des rayons X est d'au moins 0,3 % en masse.

5. Procédé de fabrication d'une polyoléfine modifiée selon la revendication 1, **caractérisé en ce qu'**une polyoléfine choisie parmi le poly(éthylène-co-propylène-co-1-butène) ayant une teneur en propylène, déterminée par spectroscopie RMN du ¹³C, d'au moins 50 % en masse et d'au plus 75 % en masse et une teneur en triades de poly(éthylène), déterminée par spectroscopie RMN du ¹³C, d'au plus 2,5 % en masse, par rapport à la proportion d'éthylène détectée au total, et une enthalpie de fusion déterminée par calorimétrie différentielle de 9 à 20 J/g, qui présente une solubilité dans le xylène à température ambiante d'au moins 96 % en masse et une solubilité dans la tétrahydrofurane à température ambiante d'au moins 67 % en masse, est mise en contact avec au moins un démarreur radicalaire et un ou plusieurs silanes, une réaction de greffage du ou des silanes sur la polyoléfine ayant lieu.

6. Utilisation de polyoléfines modifiées selon une ou plusieurs des revendications 1 à 3 en tant que ou dans des matériaux de moulage, dans des matériaux de protection, en tant que ou dans des adhésifs, dans des matériaux d'étanchéité, dans des matériaux de marquage, des matériaux de revêtement, des bandes d'étanchéité ou des bandes de toiture, en tant que primaire ou dans des formulations de primaire et/ou des formulations de promoteur d'adhésion et/ou dans des dispersions, des suspensions ou des émulsions.

7. Matériaux de moulage, matériaux de protection, adhésifs, matériaux d'étanchéité, matériaux de marquage, matériaux de revêtement, bandes d'étanchéité ou bandes de toiture, primaires, formulations de primaire, formulations de promoteur d'adhésion, dispersions, suspensions et/ou émulsions, contenant une ou plusieurs polyoléfines modifiées selon une ou plusieurs des revendications 1 à 3.

8. Adhésifs selon la revendication 7, **caractérisés en ce qu'**il s'agit de formulations d'adhésifs thermofusibles.

9. Collages contenant une ou plusieurs polyoléfines modifiées selon une ou plusieurs des revendications 1 à 3.

10. Collages selon la revendication 9, **caractérisés en ce que** les collages sont des collages d'emballages, des collages d'articles d'hygiène, des collages de bois, des collages de surfaces en verre, des collages d'étiquettes, des collages de stratification, des collages de tapis ou de gazons artificiels, des collages de chaussures, des collages sensibles à la pression, des collages de livres ou des collages de textiles.

11. Collage de tapis pour l'intégration de boucles et de filaments selon la revendication 10, **caractérisé en ce qu'**un poids d'application de 20 à 1 500 g/m² est utilisé.

12. Collage de gazon artificiel selon la revendication 10, **caractérisé en ce que** les filaments intégrés par le collage sont choisis parmi les filaments de polypropylène, les filaments de polyéthylène, les filaments de polyamide, les filaments de polyester ou les filaments mixtes des matières plastiques mentionnées.

13. Formulation de primaire et/ou de promoteur d'adhésion selon la revendication 7, contenant une ou plusieurs polyoléfines selon une ou plusieurs des revendications 1 à 3, **caractérisée en ce qu'**elle est utilisée pour le traitement d'une surface en polyoléfine.
